# EUROPEAN PATENT APPLICATION

(11) **EP 1 715 469 A2**
(43) Date of publication of application: **25.10.2006**
(21) Application number: 05257356.5
(22) Date of filing: 30.11.2005
(51) Int. Cl.: G09G 3/28

(54) **Plasma display apparatus and driving method thereof with improved gray levels obtained by subfields and reduced flickering**

(30) Priority: 21.04.2005 KR 2005033296
(71) Applicant: LG Electronics, Inc., Youngdungpo-gu Seoul 150-721 (KR)
(72) Inventor: Kim, Nam-Jin, Seoul (KR)
(74) Representative: Camp, Ronald

(57) **Abstract**

A plasma display apparatus comprises a plasma display panel having a scan electrode and a sustain electrode, a sustain pulse controller for applying a sustain pulse to either the scan electrode or the sustain electrode in a sustain period of at least one sub-field. Either electrode may be maintained at ground voltage level during the sustain period. The pulse widths and/or voltages of sustain pulses of subfields within a subfield group may differ.

## Description

The present invention relates to a plasma display panel, a driving apparatus of a plasma display panel, a plasma display apparatus and a driving method of a plasma display apparatus.

A plasma display panel (hereinafter, referred to as "PDP") displays images including characters and/or graphics by emitting phosphors with ultraviolet rays of 147 nm generated during the discharge of an inert mixed gas such as He+Xe or Ne+Xe.

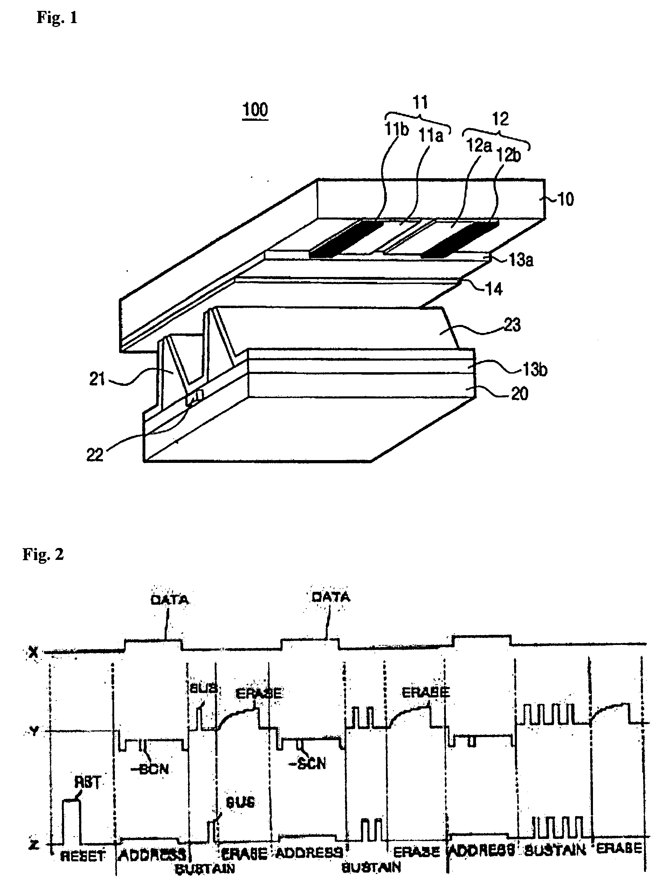

FIG. 1 is a perspective view illustrating the construction of a conventional three-electrode AC surface discharge type PDP having the structure of discharge cells arranged in matrix form.

Referring to FIG. 1, the three-electrode AC surface discharge type PDP 100 comprises scan electrodes 11a and sustain electrodes 12a formed on an upper substrate 10, and address electrodes 22 formed on a lower substrate 20. Each of the scan electrodes 11a and each of the sustain electrode 12a are comprised of a transparent electrode such as indium-tin-oxide (ITO). Metal bus electrodes 11b, 12b for reducing resistance are formed in the scan electrodes 11a and the sustain electrode 12a, respectively. An upper dielectric layer 13a and a protection film 14 are laminated on the upper substrate 10 having the scan electrodes 11a and the sustain electrode 12a formed thereon. Wall charges generated during the discharge of plasma are accumulated on the upper dielectric layer 13a. A protection film 14 serves to prevent damage to the upper dielectric layer 13a due to sputtering generated during the discharge of plasma and also to increase emission efficiency of secondary electrons. The protection film 14 is usually formed of oxide magnesium (MgO).

On the lower substrate 20 having the address electrodes 22 formed thereon are formed a lower dielectric layer 13b and barrier ribs 21. A phosphor layer 23 is coated on the surface of the lower dielectric layer 13b and the barrier ribs 21. The address electrodes 22 are disposed to intersect the scan electrodes 11a and the sustain electrode 12a. The barrier ribs 21 are formed parallel to the address electrodes 22 and serve to prevent ultraviolet rays and a visible rays, which are generated during the discharge, from leaking toward adjacent discharge cells. The phosphor layer 23 is excited with ultraviolet rays generated during the discharge of plasma to generate one of red (R), green (G) and blue (B) visible rays. An inert mixed gas for discharging gas, such as He+Xe or Ne+Xe, is injected into discharge spaces of the discharge cells, which are partitioned between the upper substrate 10 and the barrier ribs 21 and between the lower substrate 20 and the barrier ribs 21. A driving method of the conventional PDP constructed above will be described below with reference to FIG. 2.

FIG. 2 shows a driving waveform for illustrating a driving method of the conventional PDP.

Referring to FIG. 2, the conventional PDP is driven with it being divided into a reset period (RESET) for initializing the entire screen, an address period (ADDRESS) for selecting a cell, a sustain period (SUSTAIN) for sustaining the discharge of a selected cell, and an erase period (ERASE) for erasing wall charges remaining within a selected cell. In the reset period (RESET), a high reset pulse (RST) of the positive polarity is supplied to the sustain electrode Z to generate a reset discharge within cells of the entire screen. Since wall charges are uniformly accumulated on the cells of the entire screen by the reset discharge, a discharge characteristic becomes uniform.

In the address period (ADDRESS), a data pulse (DATA) is supplied to the address electrodes X. Scan pulses (-SCN) are sequentially provided to the scan electrodes Y in synchronization with the data pulse (DATA). As a result, as a voltage difference between the data pulse (DATA) supplied to the address electrodes X and the scan pulse (-SCN) supplied to the scan electrodes Y and a wall voltage within the cells are added together, an address discharge is generated in cells to which the data pulse (DATA) is supplied.

In the sustain period (SUSTAIN), a sustain pulse (SUS) is alternately supplied to the scan electrodes Y and the sustain electrode Z one by one. Therefore, as a voltage of a sustain pulse and a wall voltage within the cells are added together, a sustain discharge is generated in cells to which the sustain pulse is applied.

In the erase period (ERASE), an erase pulse (ERASE) of ramp waveform form is supplied to the entire scan electrodes Y. The erase pulse serves to erase a sustain discharge and also to uniformly form a constant amount of wall charges within cells of the entire screen.

In the plasma display panel driven with the driving waveform as shown in FIG. 2, a problem arises because flicker usually occurs.

Such flicker is usually generated because the afterglow time of phosphors is shorter than that of a vertical frequency (a frame frequency) of an image signal. For example, assuming that the vertical frequency is 60Hz, an image of one frame is displayed per 16.67 m/sec. However, since the response speed of phosphors is faster than 16.67 m/sec, flicker is generated in a screen, resulting degradation of the picture quality.

More particularly, in the PAL (Phase Alternating Line) method, a problem arises because generation of flicker is more profound because the vertical frequency is relatively short, i.e., 50Hz. In the PAL method, attempts have been made to reduce the flicker problem by allowing the arrangement of sub-fields to have a plurality of steps within one frame.

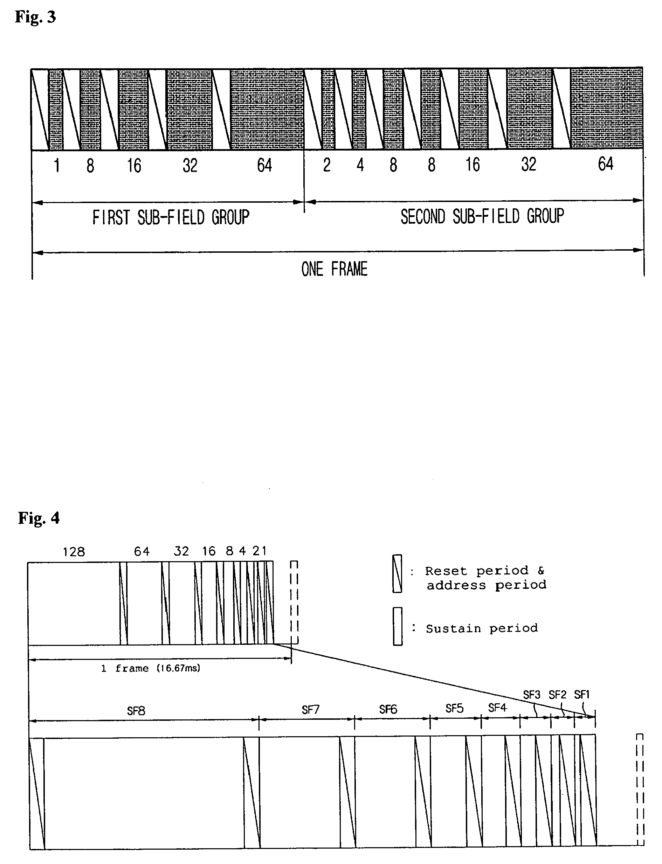

FIG. 3 is a view for illustrating the arrangement of sub-fields for implementing images of a PDP in the conventional PAL method.

Referring to FIG. 3, in the conventional PAL method, sub-fields of different weights are arranged within one frame in plural, preferably, two groups. For example, the first sub-field group comprises a sub-field of a weight 1, a sub-field of a weight 16, a sub-field of a weight 32 and a sub-field of a weight 64. The second sub-field group comprises a sub-field of a weight 2, a sub-field of a weight 4, a sub-field of two weights 8, a sub-field of a weight 16, a sub-field of a weight 32 and a sub-field of a weight 64.

As described above, the sum of weights of sub-fields within one frame, i.e., the sum of gray level values is 1 + 2 + 4 + 8 + (8+8) + (16+16) + (32+32) + (64+64), i.e., 255. As a result, 256 gray levels can be implemented.

In the PAL method in which the plasma display panel is driven with the arrangement of sub-fields having two steps within one frame, a reduction of generation of flicker can be obtained.

To represent image gray levels in the conventional PDP, one frame is driven with it being divided into several sub-fields having a different number of emissions, as shown in FIG. 4. Each of the sub-fields is represented with it being divided into a reset period for uniformly generating a discharge, an address period for selecting a discharge cell, and a sustain period for implementing gray levels depending on the number of discharges. For example, to display images with 256 gray levels, a frame period (16.67ms) corresponding to 1/60 seconds is divided into eight sub-fields. Each of the eight sub-fields is subdivided into a reset period, an address period and a sustain period. The reset period and the address period of each sub-field are the same every sub-field, whereas the sustain period increases in the ratio of 2ⁿ (where, n=0,1,2,3,4,5,6,7) in each sub-field.

As described above, in image gray levels of the conventional PDP, the gray levels are represented by controlling the number of discharges generated in the sustain period of each sub-field. To be more specific, gray levels are represented depending on a brightness weight assigned to each sub-field. That is, if the brightness weight of the first sub-field SF1 is set to the lowest 2⁰, a data pulse is supplied to the address electrodes X and scan pulses are sequentially provided to the scan electrodes Y in synchronization with the data pulse, in an address period of the first sub-field SF1, as in the driving method of the conventional PDP. As a voltage difference between the data pulse and the scan pulse and a wall voltage within cells are added together, address discharges are generated in cells to which the data pulses are supplied. In a sustain period of the first sub-field SF1, a sustain pulse corresponding to the brightness weight '2⁰' is supplied. As a result, as the sustain pulse and a wall voltage within the cells are added together, a discharge is generated in cells selected in the address period, thereby displaying gray levels.

However, the method of representing gray levels in the conventional PDP is problematic in that a brightness weight of 2° or less i.e., a gray level of 1 or less cannot be represented. That is, in the conventional PDP, a brightness weight of a natural number is set for every sub-field, and a brightness weight formed by a combination of sub-fields in which brightness weights of the natural number are set are also represented as the natural number. Accordingly, the method of representing gray levels in the conventional PDP cannot represent a fine gray level less than a natural number.

More particularly, in the PAL method, the number of sub-fields having a low gray level value is greater, as stated above. The PAL method, in which a panel with sub-fields having a number of low gray level values are driven, has a problem in that it does not represent a fine gray level less than a natural number when compared with the conventional case where one frame is driven at 60Hz.

The present invention seeks to provide an improved plasma display panel, driving apparatus of a plasma display panel, plasma display apparatus, and driving method of a plasma display apparatus. Embodiments of the invention can allow a finer gray level can be represented in a PAL driving method of a PDP, thus improving picture quality.

In accordance with a first aspect of the invention a plasma display apparatus comprises a plasma display panel including scan electrodes and a sustain electrode, electrode drivers for driving the scan electrodes and the sustain electrodes, respectively, and a sustain pulse controller for controlling the electrode drivers to divide one frame into a plurality of sub-field groups, each having at least one or more sub-fields, and to apply a sustain pulse to only one of the scan electrodes and the sustain electrode in a sustain period of at least one sub-field of the sub-field groups.

In accordance with another aspect of the invention a plasma display apparatus comprises a plasma display panel including scan electrodes and a sustain electrode, electrode drivers for driving the scan electrodes and the sustain electrodes, respectively, and a sustain pulse controller for controlling the electrode drivers to divide one frame into a plurality of sub-field groups, each having at least one or more sub-fields, and to keep the scan electrodes and the sustain electrode ground level voltage in a sustain period of at least one sub-field of the sub-field groups.

In accordance with another aspect of the invention a plasma display apparatus comprises a plasma display panel including scan electrodes and a sustain electrode, electrode drivers for driving the scan electrodes and the sustain electrodes, respectively, and a sustain pulse controller for controlling the electrode drivers to divide one frame into a plurality of sub-field groups, each having at least one or more sub-fields, and to set a first width of a sustain pulse, which is supplied to the scan electrodes or the sustain electrode in a sustain period of at least one sub-field of the sub-field groups, to be narrower than a second width of a sustain pulse, which is supplied in a sustain period of the remaining sub-fields of the sub-field groups.

In accordance with another aspect of the invention a plasma display apparatus comprises a plasma display panel including scan electrodes and a sustain electrode, electrode drivers for driving the scan electrodes and the sustain electrodes, respectively, and a sustain pulse controller for controlling the electrode drivers to divide one frame into a plurality of sub-field groups, each having at least one or more sub-fields, and to set a first voltage of a sustain pulse, which is supplied to the scan electrodes or the sustain electrode in a sustain period of at least one sub-field of the sub-field groups, to be less than a second voltage of a sustain pulse, which is supplied in a sustain period of the remaining sub-fields of the sub-field groups.

In accordance with another aspect of the invention a plasma display apparatus

comprises a plasma display panel including scan electrodes and a sustain electrode, electrode drivers for driving the scan electrodes and the sustain electrodes, respectively, and a sustain pulse controller for controlling the electrode drivers to divide one frame into a plurality of sub-field groups, each having at least one or more sub-fields, and to set a first slope of a sustain pulse, which is supplied to the scan electrodes or the sustain electrode in a sustain period of at least one sub-field of the sub-field groups, to be less than a second slope of a sustain pulse, which is supplied in a sustain period of the remaining sub-fields of the sub-field groups.

An idle period having a predetermined length may be included between frames, and subfield groups of the frame may be continuously arranged within the same frame.

A first idle period having a predetermined length may be included between frames, and a second idle period having a predetermined length may be further included between the subfield groups within the same frame.

Lengths of the first idle period and the second idle period may be the same.

The plurality of subfield groups may comprise a plurality of subfields and the plurality of subfield groups may be arranged in increasing order of a gray level value of subfields within each group.

The plurality of subfield groups may comprise a plurality of subfields and the plurality of subfield groups may be arranged in decreasing order of a gray level value of subfields within each group.

The frame may be divided into two subfield groups. Each of two subfield groups may comprise a plurality of subfields. The two subfield groups may be arranged in size order of a different gray level value of subfields within each subfield group.

Any one of the two subfield groups may be arranged in increasing order of a gray level value of subfields within each group.

Any one of the two subfield groups may be arranged in decreasing order of a gray level value of subfields within each group.

Any one of the two subfield groups may be arranged in decreasing order of a gray level value of subfields within each group. The other one of the two subfield groups may be arranged in increasing order of a gray level value of subfields within each group.

Embodiments of the invention will now be described by way of non-limiting example only, with reference to the drawings, in which:

FIG. 1 is a perspective view illustrating the construction of a conventional three-electrode AC surface discharge type PDP having the structure of discharge cells arranged in matrix form;

FIG. 2 shows a driving waveform for illustrating a driving method of the conventional PDP;

FIG. 3 illustrates the arrangement of sub-fields for implementing images of a PDP in the conventional PAL method;

FIG. 4 illustrates a method of implementing image gray levels of the conventional PDP;

FIG. 5 illustrates the construction of a plasma display apparatus according to a first embodiment of the present invention;

FIGS. 6(a) and 6(b) illustrate a driving method of the plasma display apparatus according to a first embodiment of the present invention;

FIGS. 7(a) to 7(c) illustrate the arrangement of weights of sub-fields comprised in a frame according to a first embodiment of the present invention;

FIG. 8 illustrate the construction of a plasma display apparatus according to a second embodiment of the present invention;

FIGS. 9(a) and 9(b) illustrate a driving method of the plasma display apparatus according to a second embodiment of the present invention;

FIG. 10 illustrate the construction of a plasma display apparatus according to a third embodiment of the present invention;

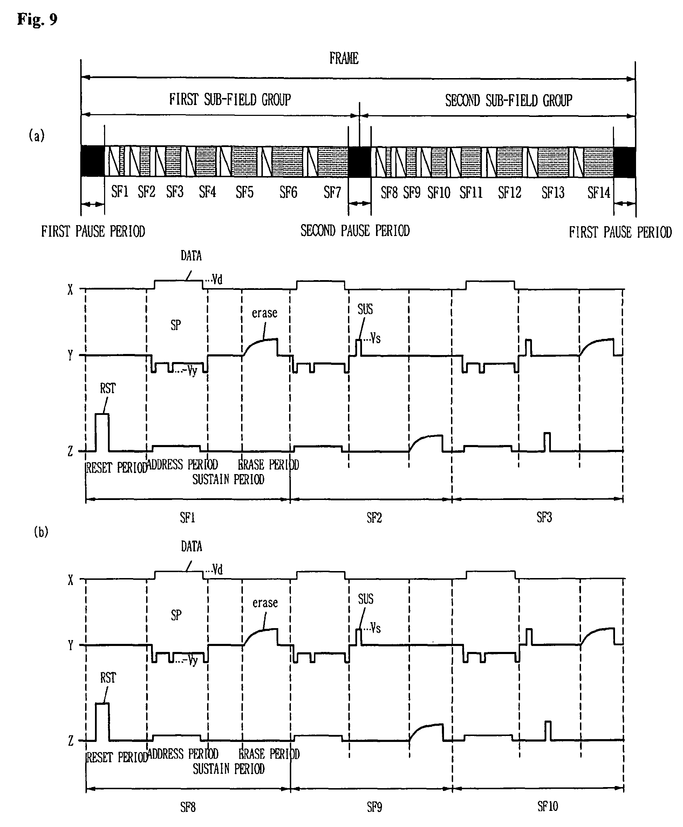

FIGS. 9(a) and 9(b) illustrate a driving method of the plasma display apparatus according to a third embodiment of the present invention;

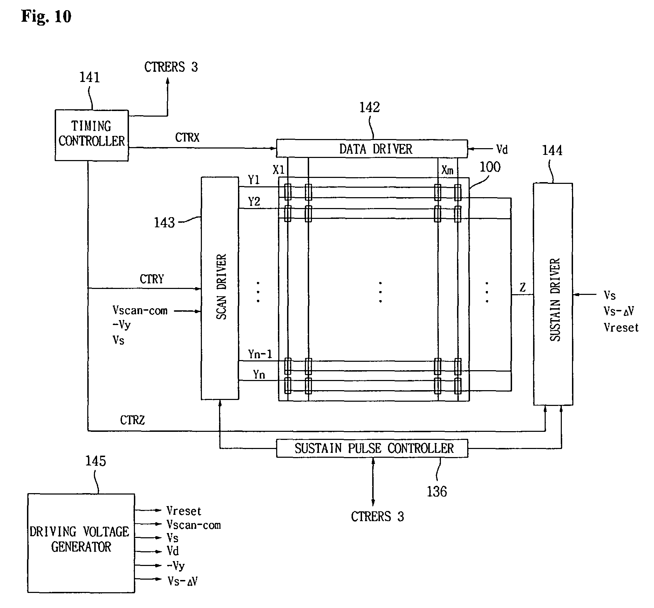

FIG. 10 illustrate the construction of a plasma display apparatus according to a fourth embodiment of the present invention;

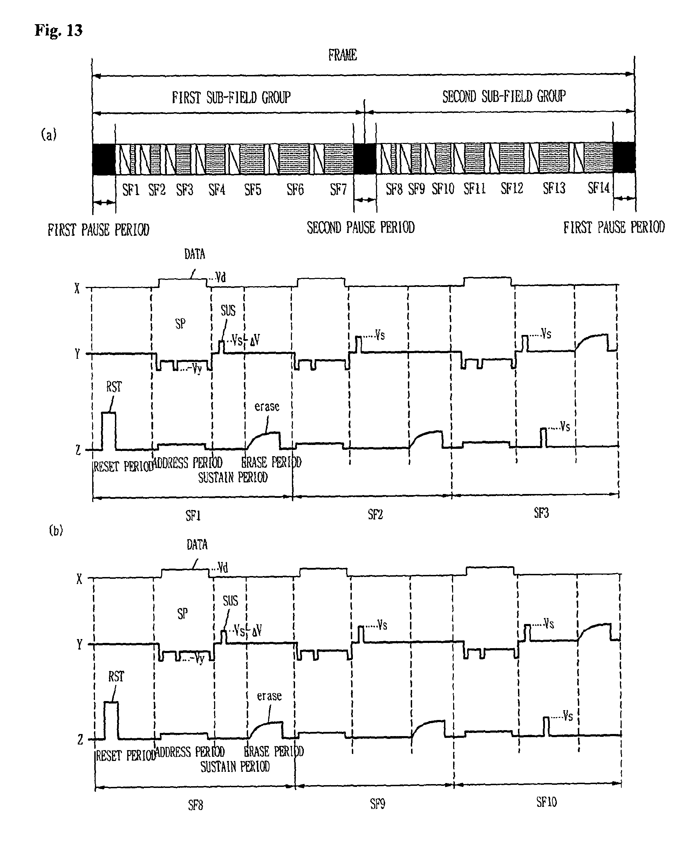

FIGS. 13(a) and 13(b) illustrate a driving method of the plasma display apparatus according to a fourth embodiment of the present invention;

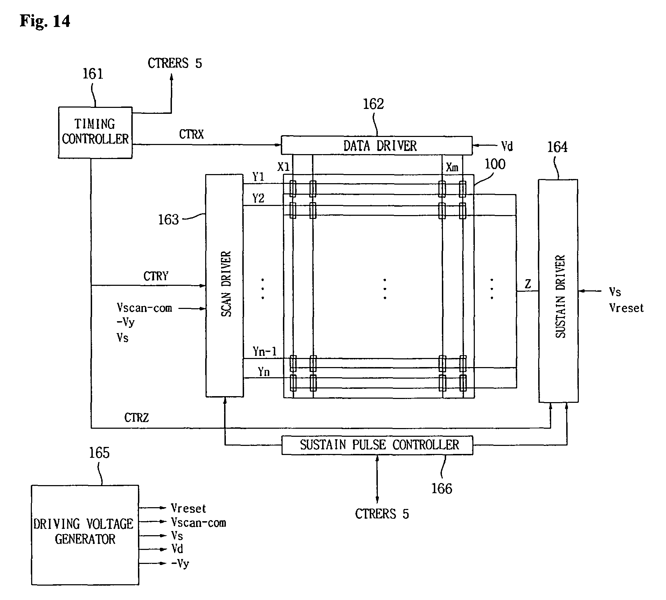

FIG. 14 illustrate the construction of a plasma display apparatus according to a fifth embodiment of the present invention; and

FIGS. 13(a) and 13(b) illustrate a driving method of the plasma display apparatus according to a fifth embodiment of the present invention.

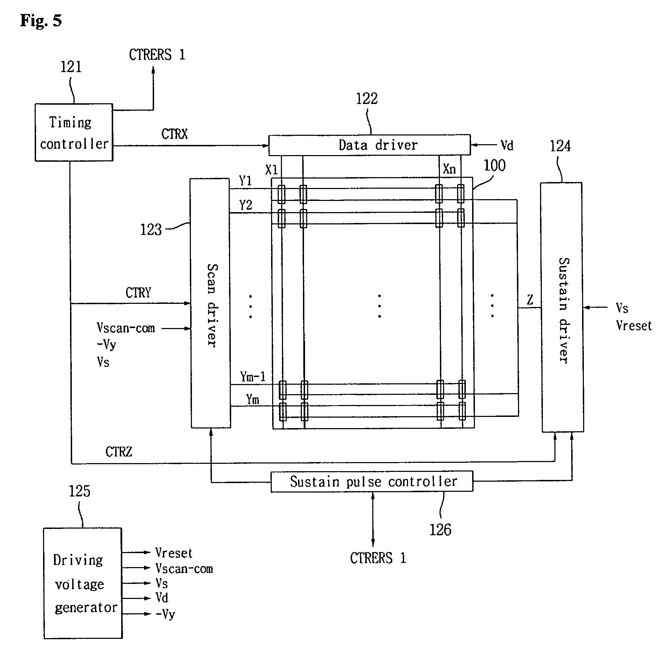

Referring to FIG. 5, the plasma display apparatus according to a first embodiment comprises a PDP 100 including scan electrodes Y1 to Yn and a sustain electrode Z, and a plurality of address electrodes X1 to Xm crossing the scan electrodes Y1 to Yn and the sustain electrode Z, a data driver 122 for supplying data to the address electrodes X1 to Xm formed in a lower substrate (not shown) of the PDP 100, a scan driver 123 for driving the scan electrodes Y1 to Yn, a sustain driver 124 for driving the sustain electrode Z, i.e., a common electrode, a sustain pulse controller 126 for controlling the number of sustain pulses in sub-fields for displaying the lowest gray level, a timing controller 121 for controlling the data driver 122, the scan driver 123, the sustain driver 124 and the sustain pulse controller 126 when the PDP is driven, and a driving voltage generator 125 for supplying driving voltages necessary for the respective drivers 122, 123 and 124.

The plasma display apparatus constructed above according to the first embodiment displays images comprised of a frame by way of a combination of at least one or more sub-fields in which driving pulses are applied to the address electrodes X1 to Xm, the scan electrodes Y1 to Yn, and the sustain electrode Z in a reset period, an address period and a sustain period. The frame is divided into a plurality of sub-field groups. In the plurality of sub-field groups, the respective drivers 122, 123 and 124 are controlled so that a sustain pulse is applied to any one of the scan electrodes Y1 to Yn and the sustain electrode Z in a sustain period of at least one of the plurality of sub-field groups.

The PDP 100 has an upper substrate (not shown) and a lower substrate (not shown), which are parallel with a predetermined distance therebetween. A number of electrodes such as the scan electrodes Y1 to Yn and the sustain electrode Z are formed in pairs on the upper substrate. The address electrodes X1 to Xm are formed on the lower substrate in such a way as to intersect the scan electrodes Y1 to Yn and the sustain electrode Z.

The data driver 122 is supplied with data, which have undergone inverse gamma correction and error diffusion through an inverse gamma correction circuit, an error diffusion circuit and the like and then mapped to respective sub-fields by a sub-field mapping circuit. The data driver 122 samples and latches the data in response to a data timing control signal (CTRX) from the timing controller 121 and provides the data to the address electrodes X1 to Xm.

The scan driver 123 sequentially provides scan pulses (SP) of a scan voltage (-Vy) to the scan electrodes Y1 to Yn during the address period under the control of the timing controller 121. The scan driver 123 also operates alternately with the sustain driver 124 to provide a sustain pulse (SUS) to the scan electrodes Y1 to Yn during the sustain period.

The sustain driver 124 supplies a reset waveform to the sustain electrode Z during the reset period under the control of the timing controller 121. The sustain driver 124 also provides a predetermined bias voltage to the sustain electrode Z during the address period, and operates alternately with the scan driver 123 to provide the sustain pulse (SUS) to the sustain electrode Z during the sustain period. In addition, the sustain driver 124 provides an erase waveform, such as a ramp waveform, to the sustain electrode Z during the erase period.

During the sustain period, when the scan driver 123 and the sustain driver 124 are driven, the sustain pulse controller 126 to be described later alternately supplies the sustain pulse (SUS) to the scan electrodes Y1 to Yn and the sustain electrode Z depending on a brightness weight, i.e., a gray level value. The sustain pulse controller 126 can provide the sustain pulse (SUS) to only one of the scan electrodes Y1 to Yn and the sustain electrode Z during a sustain period of a sub-field that displays the lowest gray level. The term "the lowest gray level" refers to a gray level value in a sub-field having the lowest brightness weight when gray levels are represented with each brightness weight being allocated to each sub-field in the case where the plasma display apparatus is driven with it being divided into a plurality of sub-fields. To be more specific, the term refers to a gray level which is represented by providing a sustain pulse having a brightness weight of 2⁰ or less, which can represent a decimal gray level in a sustain period of a predetermined sub-field.

The sustain pulse controller 126 controls a sustain pulse provided in the sustain period depending on a gray level value of data mapped to each sub-field in response to the control signal of the timing controller 121. In other words, the sustain pulse controller 126 controls the sustain pulse to be supplied to only one of the scan electrodes Y1 to Yn and the sustain electrode Z during a sustain period of a sub-field in which the lowest gray level of a plurality of sub-fields is represented, unlike a case where the sustain pulse is supplied to the scan electrodes Y1 to Yn and the sustain electrode Z during a sustain period of a sub-field in which the remaining gray levels are represented. The sustain pulse controller 126 can be built in the scan driver 123 or the sustain driver 124.

The timing controller 121 receives a vertical/horizontal sync signal and a clock signal and generates timing control signals (CTRX, CTRY, CTRZ and CTRERS1) for controlling an operating timing and synchronization of each of the drivers 122, 123, 124 and the sustain pulse controller 126 in the reset period, the address period and the sustain period. The timing controller 121 supplies the generated timing control signals (CTRX, CTRY, CTRZ and CTRERS1) to corresponding drivers 122, 123 and 124, and the sustain pulse controller 126, thus controlling the drivers 122, 123 and 124, and the controller 126.

The data control signal (CTRX) comprises a sampling clock for sampling data, a latch control signal, and a switching control signal for controlling an on/off time of an energy recovery circuit and a driving switch element. The scan control signal (CTRY) comprises a switching control signal for controlling an on/off time of an energy recovery circuit and a driving switch element within the scan driver 123. The sustain control signal (CTRZ) comprises a switching control signal for controlling an on/off time of an energy recovery circuit and a driving switch element within the sustain driver 124.

The driving voltage generator 125 generates a set-up voltage (Vsetup), a scan-common voltage (Vscan-com), a scan voltage (-Vy), a sustain voltage (Vs), a data voltage (Vd) and the like. These driving voltages may be varied depending on the composition of the discharge gas or the structure of a discharge cell.

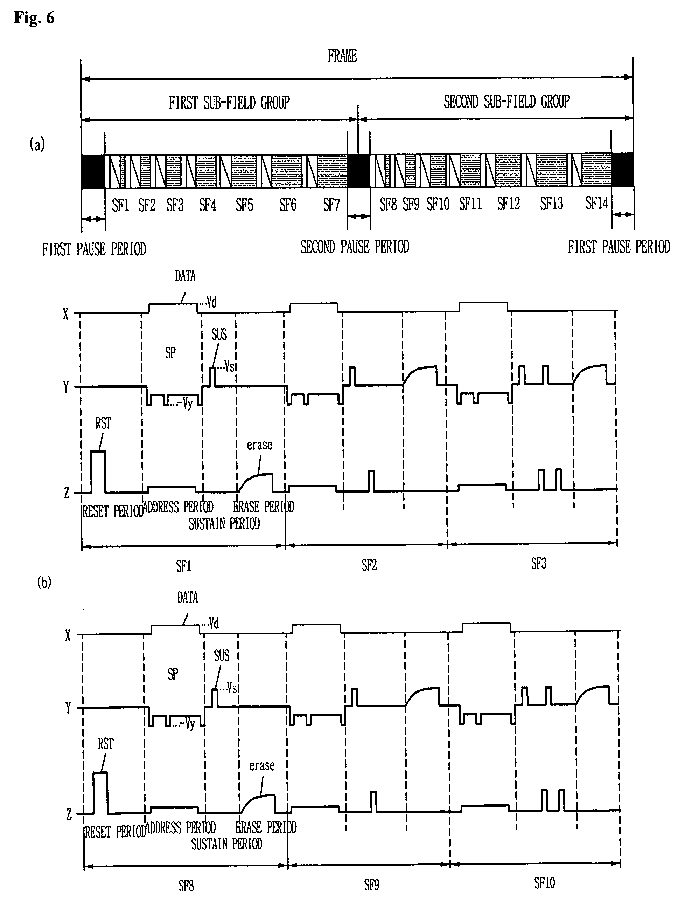

Referring to FIG. 6, in the driving method of the plasma display apparatus as shown in FIG. 6(a), one frame is divided into a plurality of sub-field groups including one or more sub-fields, and a pause period having a predetermined length is comprised between respective sub-field groups. The sub-field group is time-divided into a number of sub-fields SF1, SF2, SF3, SF4,..., each including a reset period, an address period, a sustain period and an erase period. Each sub-field that is time-divided as described above is set to have a predetermined brightness weight.

More particularly, the number of sustain pulses supplied in the sub-fields SF1, SF8 having the lowest brightness weight in each sub-field group is set to be different from the number of sustain pulses supplied in the sub-fields SF2, SF3, SF4,...,SF9, SF10, SF11,..., which have different brightness weights. For example, when the plasma display apparatus is driven with one frame being divided into a first sub-field group and a second sub-field group, it is driven in each sub-field as shown in FIG. 6(b).

<First Sub-field Group>

(First Sub-field)

In the reset period of the first sub-field SF1, a positive reset pulse (RST) or a set-up/set-down pulse (not shown) of ramp signal form, which has a predetermined slope, is supplied to the sustain electrode Z to generate a reset discharge within cells of the entire screen. As wall charges are uniformly accumulated on the cells of the entire screen by the reset discharge.

In the address period, a data pulse (DATA) is supplied to the address electrodes X, and negative scan pulses (SP) are sequentially supplied to the scan electrodes Y in synchronization with the data pulse (DATA). As the voltage difference between the scan pulse and the data pulse and a wall voltage generated in the reset period are added together, an address discharge is generated within cells to which the data pulses are provided.

In the sustain period, although a sustain pulse (SUS) can be alternately supplied to the scan electrodes Y and the sustain electrode Z, the sustain pulse (SUS) is preferably supplied to only one of the scan electrodes Y and the sustain electrode Z so that a gray level can have a decimal value, as shown in FIG. 6.

In the erase period, when the sustain pulse (SUS) is supplied to only one of the scan electrodes Y and the sustain electrode Z in the sustain period, an erase pulse (erase), such as a ramp waveform, is supplied to the electrodes Y, Z to which the sustain pulse is not supplied.

(Second Sub-field)

The address period of the second sub-field SF2 is the how as the address period of the first sub-field SF1. In a sustain period, the sustain pulse (SUS) is alternately supplied to the scan electrodes Y and the sustain electrode Z in the same manner as the first sub-field SF1. In an erase period, the erase pulse applied in the first sub-field SF1 is supplied to the scan electrodes Y.

(Third to Seventh Sub-fields)

The address period of each of the third to seventh sub-fields SF3 to SF7 is the how as that of the first sub-field SF1. In addition, in a sustain period, the sustain pulse (SUS) is alternately supplied to the scan electrodes Y and the sustain electrode Z in the same manner as the second sub-field SF2. In an erase period, the erase pulse is applied to the scan electrodes Y in the same manner as the second sub-field SF2.

<Second Sub-field Group>

(Eighth Sub-field)

In the reset period of the eighth sub-field SF8, in the same manner as the first sub-field SF1 of the first sub-field group, a positive high reset pulse or a set-up/set-down pulse (not shown) of ramp signal form, which has a predetermined slope, is supplied to the sustain electrode Z to generate a reset discharge within cells of the entire screen. As wall charges are uniformly accumulated on the cells of the entire screen by the reset discharge.

In the address period, the data pulse (DATA) is supplied to the address electrodes X, and the negative scan pulses (SP) are sequentially supplied to the scan electrodes Y in synchronization with the data pulse (DATA). As the voltage difference between the scan pulse and the data pulse and a wall voltage generated in the reset period are added together, an address discharge is generated within cells to which the data pulses are provided.

In the sustain period, although the sustain pulse (SUS) can be alternately supplied to the scan electrodes Y and the sustain electrode Z, it is preferably provided to only one of the scan electrodes Y and the sustain electrode Z so that a gray level can have a decimal value as shown in FIG. 6.

In the erase period, when the sustain pulse (SUS) is supplied to only one of the scan electrodes Y and the sustain electrode Z in the sustain period, the erase pulse (erase), such as a ramp waveform, is supplied to the electrodes Y, Z to which the sustain pulse is not supplied.

(Ninth Sub-field)

The address period of the ninth sub-field SF9 is the how as that of the eighth sub-field SF8. In a sustain period, the sustain pulse (SUS) is alternately supplied to the scan electrodes Y and the sustain electrode Z in the same manner as the eighth sub-field SF8. Furthermore, in an erase period, the erase pulse (erase) supplied to the eighth sub-field SF8 is also supplied to the scan electrodes Y.

(Tenth to Fourteenth Sub-fields)

The address period of each of the tenth to fourteenth sub-fields SF10 to SF14 is the how as the address period of the eighth sub-field SF8. In a sustain period, the sustain pulse (SUS) is alternately supplied to the scan electrodes Y and the sustain electrode Z in the same manner as the ninth sub-field SF9. In an erase period, the erase pulse is applied to the scan electrodes Y in the same manner as the ninth sub-field SF9.

In the plasma display apparatus that is driven as described above according to the first embodiment in the sub-fields SF1, SF9 in which the sustain pulse is applied to only one of the scan electrodes Y and the sustain electrode Z, a gray level value lower than a gray level value depending on light, which is represented in the sub-field SF3 in which the sustain pulse is alternately applied to the scan electrodes and the sustain electrode in the prior art, can be represented. Therefore, the picture quality improves.

In the first embodiment any light that is not radiated in the pause period is comprised between sub-field groups of the same frame. Non-standard video signals are processed using deviation in horizontal line sync signals, such as signals generated by a video recorder or a video game machine. The sub-field groups within the same frame comprised in the pause period operate in a consecutive manner without the pause period. The pause period may exist between the sub-field groups within each frame, as described above, but may exist between respective frames.

In other words, when one frame comprises a first sub-field group and a second sub-field group, a first pause period is comprised before the first sub-field group is driven and after the second sub-field group is driven, respectively. A second pause period is comprised between the first sub-field group and the second sub-field group. The lengths of the first pause period and the second pause period may be set to be different from each other depending on a processing period of a non-standard video signal, but can be set to be the same for the purpose of efficient signal processing.

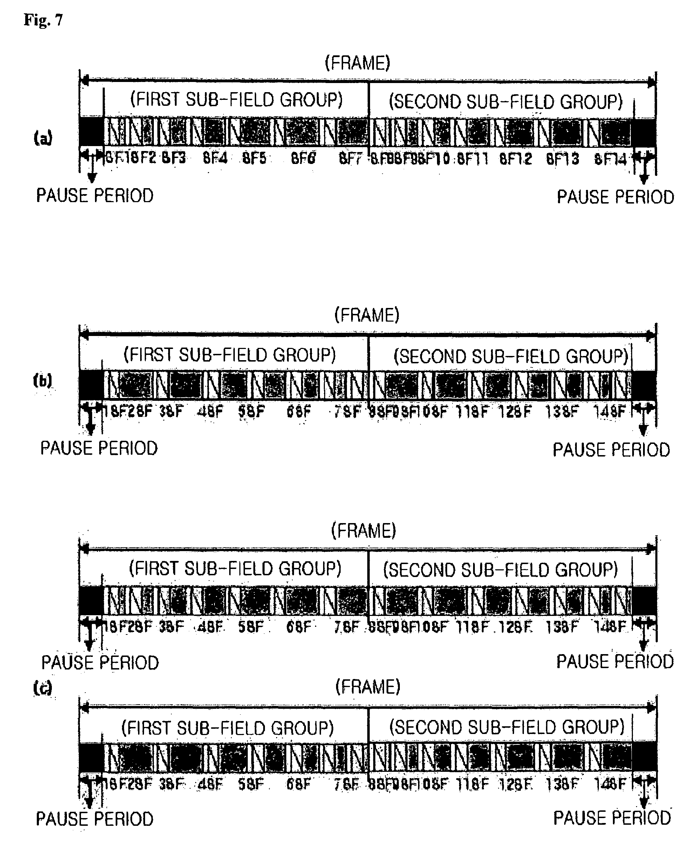

In the first embodiment the weights of sub-fields comprised in a frame can be arranged in various types as shown in FIG. 7.

As shown in FIG. 7(a), one frame comprises two or more sub-field groups (not shown). In each sub-field group, sub-fields are arranged within the same group in order from lowest to highest weight. In other words, sub-fields arranged within each group are arranged in order from lowest to highest gray level values. As shown in FIG. 7(b), one frame comprises two or more sub-field groups (not shown). In each sub-field group, sub-fields are arranged within the same group in order from highest to lowest weight. In other words, sub-fields arranged within each group are arranged in order from highest gray level values.

As shown in FIG. 7(c), one frame comprises two or more sub-field groups (not shown). In each sub-field group, sub-fields are arranged within the same group in order by weight. In other words, sub-fields within any one of sub-field groups can be arranged in order from lowest to highest weight, which are represented by a gray level value, or can be arranged in order from highest to lowest weight, which are represented by a gray level value.

In FIG. 7(c), sub-fields can be arranged in order depending on the weights of the sub-fields and a predetermined rule within a sub-field group in which weights of sub-fields are different. However, weights of sub-fields within each sub-field group can be arranged randomly without a predetermined rule.

As described above, if the weights of the sub-fields within each sub-field group are arranged in various types, pseudo contour noise generated in a still image, particularly, in a motion picture can be prevented and the picture quality will improve accordingly.

A plasma display apparatus according to a second embodiment comprises a plasma display panel including scan electrodes and a sustain electrode, electrode drivers for driving the scan electrodes and the sustain electrodes, respectively, and a sustain pulse controller for controlling the electrode drivers to divide one frame into a plurality of sub-field groups, each having at least one or more sub-fields, and to keep the scan electrodes and the sustain electrode at ground level voltage in a sustain period of at least one sub-field of the sub-field groups.

Second Embodiment

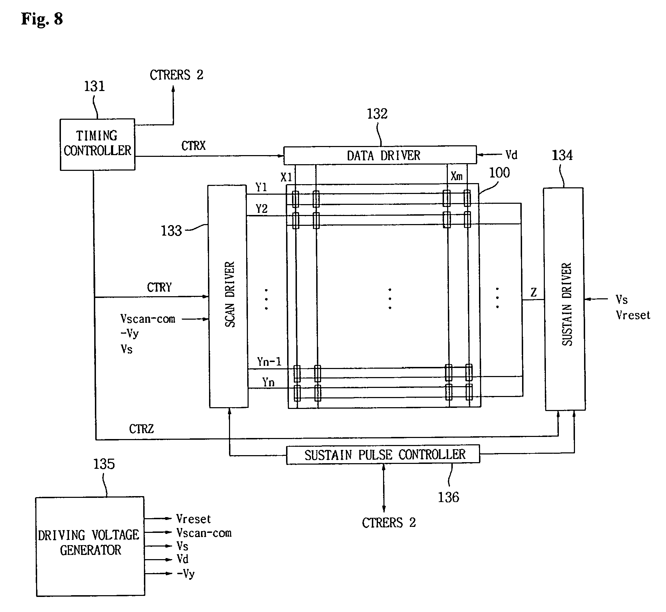

Referring to FIG. 8, the plasma display apparatus according to a second embodiment comprises a PDP 100 including scan electrodes Y1 to Yn and a sustain electrode Z, and a plurality of address electrodes X1 to Xm crossing the scan electrodes Y1 to Yn and the sustain electrode Z, a data driver 132 for supplying data to the address electrodes X1 to Xm formed on a lower substrate (not shown) of the PDP 100, a scan driver 133 for driving the scan electrodes Y1 to Yn, a sustain driver 134 for driving the sustain electrode Z, i.e., a common electrode, a sustain pulse controller 136 for controlling a sustain pulse in sub-fields for representing the lowest gray level, a timing controller 131 for controlling the data driver 132, the scan driver 133, the sustain driver 134 and the sustain pulse controller 136 when the PDP is driven, and a driving voltage generator 135 for supplying driving voltages necessary for the respective drivers 132, 133 and 134.

The plasma display apparatus constructed above according to the second embodiment displays images comprised of a frame by way of a combination of at least one or more sub-fields in which driving pulses are applied to the address electrodes X1 to Xm, the scan electrodes Y1 to Yn, and the sustain electrode Z in a reset period, an address period and a sustain period. The frame is divided into a plurality of sub-field groups. The respective drivers 132, 133 and 134 are controlled so that a sustain pulse is not applied to any one of the scan electrodes Y1 to Yn and the sustain electrode in a sustain period of at least one of sub-fields of the plurality of sub-field groups.

The PDP 100 has an upper substrate (not shown) and a lower substrate (not shown), which are parallel to each other with a predetermined distance therebetween. In addition, a number of electrodes such as the scan electrodes Y1 to Yn and the sustain electrode Z are formed in pairs on the upper substrate. The address electrodes X1 to Xm are formed on the lower substrate to intersect the scan electrodes Y1 to Yn and the sustain electrode Z.

The data driver 132 is supplied with data, which have undergone inverse gamma correction and error diffusion by an inverse gamma correction circuit, an error diffusion circuit and the like and then have mapped to respective sub-fields by a sub-field mapping circuit. The data driver 132 samples and latches the data in response to a data timing control signal (CTRX) from the timing controller 131 and provides the data to the address electrodes X1 to Xm.

The scan driver 133 sequentially provides scan pulses (SP) of a scan voltage (-Vy) to the scan electrodes Y1 to Yn during the address period under the control of the timing controller 131. The scan driver 133 operates alternately with the sustain driver 134 to provide the sustain pulse (SUS) to the scan electrodes Y1 to Yn during the sustain period.

The sustain driver 134 supplies a reset waveform to the sustain electrode Z during the reset period under the control of the timing controller 131. The sustain driver 134 also provides a predetermined bias voltage to the sustain electrode Z during the address period and operates alternately with the scan driver 133 to provide the sustain pulse (SUS) to the sustain electrode Z during the sustain period. In addition, the sustain driver 134 provides an erase waveform, such as a ramp waveform, to the sustain electrode Z during the erase period.

During the sustain period where the scan driver 133 and the sustain driver 134 are driven, although the sustain pulse controller 136 to be described later can control the sustain pulse (SUS) to be alternately supplied to the scan electrodes Y1 to Yn and the sustain electrode Z depending on a brightness weight, i.e., a gray level value, the sustain pulse (SUS) is not provided to any one of the scan electrodes Y1 to Yn and the sustain electrode Z during a sustain period of a sub-field that represents the lowest gray level. The term "the lowest gray level" refers to a gray level value in a sub-field having the lowest brightness weight when gray levels are represented with each brightness weight being allocated to each sub-field in the case where the plasma display apparatus is driven with it being divided into a plurality of sub-fields.

The sustain pulse controller 136 controls the sustain pulse provided in the sustain period depending on a gray level value of data mapped to each sub-field in response to the control signal from the timing controller 131. In other words, the sustain pulse controller 136 controls the sustain pulse not to be supplied to the scan electrodes Y1 to Yn and the sustain electrodes Z during a sustain period of a sub-field that represents the lowest gray level, of a plurality of sub-fields, unlike a case where the sustain pulse is supplied to the scan electrodes Y1 to Yn and the sustain electrode Z during a sustain period of a sub-field that represents the remaining gray levels. The sustain pulse controller 136 can be built in the scan driver 133 or the sustain driver 134.

The timing controller 131 receives a vertical/horizontal sync signal and a clock signal, and generates timing control signals (CTRX, CTRY, CTRZ and CTRERS2) for controlling an operating timing and synchronization of each of the drivers 132, 133, 134 and the sustain pulse controller 136 in a reset period, an address period and a sustain period. The timing controller 131 applies the generated timing control signals (CTRX, CTRY, CTRZ and CTRERS2) to corresponding drivers 132, 133 and 134, and the sustain pulse controller 136, thereby controlling the drivers 132, 133 and 134 and the controller 136.

The data control signal (CTRX) comprises a sampling clock for sampling data, a latch control signal and a switching control signal for controlling an on/off time of an energy recovery circuit and a driving switch element. The scan control signal (CTRY) comprises a switching control signal for controlling an on/off time of an energy recovery circuit and a driving switch element within the scan driver 133. The sustain control signal (CTRZ) comprises a switching control signal for controlling an on/off time of an energy recovery circuit and a driving switch element within the sustain driver 134.

The driving voltage generator 135 generates a set-up voltage (Vsetup), a scan-common voltage (Vscan-com), a scan voltage (-Vy), a sustain voltage (Vs), a data voltage (Vd) and the like. These driving voltages may be varied depending on the composition of the discharge gas and/or the structure of a discharge cell.

Referring to FIG. 9, in the driving method of the plasma display apparatus in the same manner as the first embodiment one frame is divided into a plurality of sub-field groups, each including one or more sub-fields, as shown in FIG. 9(a). A pause period having a predetermined length is comprised between the sub-field groups. The sub-field group is time-divided into a plurality of sub-fields SF1, SF2, SF3, SF4,..., each having a reset period, an address period, a sustain period and an erase period. Each sub-field that is time-divided as described above is set to have a predetermined brightness weight.

More particularly, in each sub-field group, a sustain pulse is not supplied in the sub-fields SF1, SF8 having the lowest brightness weight. In the sub-fields SF2, SF3, SF4, ..., SF9, SF10, SF11,... having other brightness weights, however, a sustain pulse that is usually provided is supplied. For example, when the plasma display apparatus is driven with one frame being divided into a first sub-field group and a second sub-field group, the plasma display apparatus is driven as shown in FIG. 9(b) in each sub-field.

<First Sub-field Group>

(First Sub-field)

In the reset period of the first sub-field SF1, a positive reset pulse or a set-up/set-down pulse (not shown) of ramp signal form, which has a predetermined slope, is supplied to the sustain electrode Z to generate a reset discharge within cells of the entire screen. As wall charges are uniformly accumulated on the cells of the entire screen by the reset discharge.

In the address period, a data pulse (DATA) is supplied to the address electrodes X and negative scan pulses (SP) are sequentially supplied to the scan electrodes Y in synchronization with the data pulse (DATA). As a voltage difference between the scan pulse and the data pulse and a wall voltage generated in the reset period are added, an address discharge is generated within cells to which the data pulses are provided.

In the sustain period, although the sustain pulse (SUS) can alternately supplied to the scan electrodes Y and the sustain electrode Z, the sustain pulse (SUS) is not supplied to any one of the scan electrodes Y and the sustain electrode Z, as shown in FIG. 9. That is, the scan electrodes Y and the sustain electrode Z are kept ground level voltage.

In the erase period, the erase pulse (erase) is supplied to the scan electrodes Y.

(Second Sub-field)

The address period of the second sub-field SF2 is the how as the address period of the first sub-field SF1. In the sustain period, although the sustain pulse (SUS) can be alternately supplied to the scan electrodes Y and the sustain electrode Z in the same manner as the first sub-field SF1, the sustain pulse (SUS) is supplied to only one of the scan electrodes Y and the sustain electrode Z, as shown in FIG. 9. Furthermore, in the erase period, the erase pulse (erase), such as a ramp waveform, is supplied to the electrodes Y, Z to which the sustain pulse is not provided when the sustain pulse (SUS) is supply to only one of the scan electrodes Y and the sustain electrode Z in the sustain period.

(Third to Seventh Sub-fields)

The address period of each of the third to seventh sub-fields SF3 to SF7 is the how as the address period of the first sub-field SF1. In the sustain period, the sustain pulse (SUS) is alternately supplied to the scan electrodes Y and the sustain electrode Z.

In the erase period, the erase pulse is applied to the scan electrodes Y in the same manner as the second sub-field SF2.

<Second Sub-field Group>

(Eighth Sub-field)

In the reset period of the eighth sub-field SF8, a positive high reset pulse or a set-up/set-down pulse (not shown) of ramp signal form, which has a predetermined slope, is supplied to the sustain electrode Z to generate a reset discharge within cells of the entire screen. As wall charges are uniformly accumulated on the cells of the entire screen by the reset discharge.

In the address period, the data pulse (DATA) is supplied to the address electrodes X, and negative scan pulses (SP) are sequentially supplied to the scan electrodes Y in synchronization with the data pulse (DATA). As the voltage difference between the scan pulse and the data pulse and a wall voltage generated in the reset period are added together, an address discharge is generated within cells to which the data pulses are provided.

In the sustain period, although the sustain pulse (SUS) can be alternately supplied to the scan electrodes Y and the sustain electrode Z, the sustain pulse (SUS) is not provided to any one of the scan electrodes Y and the sustain electrode Z, as shown in FIG. 9.

In the erase period, the erase pulse (erase) is supplied to the electrodes Y.

(Ninth Sub-field)

The address period of the ninth sub-field SF9 is the how as the address period of the eighth sub-field SF8. In the sustain period, although the sustain pulse (SUS) can be alternately supplied to the scan electrodes Y and the sustain electrode Z in the same manner as the eighth sub-field SF8, the sustain pulse (SUS) is supplied to only one of the scan electrodes Y and the sustain electrode Z as shown in FIG. 9. In the erase period, the erase pulse (erase), such as a ramp waveform, is supplied to the electrodes Y, Z to which the sustain pulse is not provided when the sustain pulse (SUS) is provided to only one of the scan electrodes Y and the sustain electrode Z in the sustain period.

(Tenth to Fourteenth Sub-fields)

The address period of each of the tenth to fourteenth sub-fields SF10 to SF14 is the how as the address period of the eighth sub-field SF8. In the sustain period, the sustain pulse (SUS) is alternately supplied to the scan electrodes Y and the sustain electrode Z.

In the erase period, the erase pulse is applied to the scan electrodes Y.

In the plasma display apparatus that is driven as described above according to a second embodiment of the present invention, in the sub-fields SF1, SF9 in which the sustain pulse is not applied to any one of the scan electrodes Y and the sustain electrode Z, a gray level value lower than a gray level value depending on light, which is represented in the sub-fields SF2, SF9 in which a sustain pulse is applied to only one of the scan electrodes Y and the sustain electrode Z in the sustain period, can be represented.

In the second embodiment a pause period comprised between frames or between sub-field groups of the same frame, and the arrangement of the weights of sub-fields comprised in a frame are the same as those of the first embodiment of the present invention. Therefore, description thereof will be omitted for simplicity.

A plasma display apparatus according to a third embodiment comprises a plasma display panel including scan electrodes and a sustain electrode, electrode drivers for driving the scan electrodes and the sustain electrodes, respectively, and a sustain pulse controller for controlling the electrode drivers to divide one frame into a plurality of sub-field groups, each having at least one or more sub-fields, and to set a first width of a sustain pulse, which is supplied to the scan electrodes or the sustain electrode in a sustain period of at least one sub-field of the sub-field groups, to be narrower than a second width of a sustain pulse, which is supplied in a sustain period of the remaining sub-fields of the sub-field groups.

The sustain pulse controller controls the first width of the sustain pulse to be 3 µs or less.

The sustain pulse controller controls the sustain pulse having the first width to be applied to only one of the scan electrodes and the sustain electrode.

Third Embodiment

Referring to FIG. 10, the plasma display apparatus according to a third embodiment comprises a PDP 100, a data driver 142 for supplying data to address electrodes X1 to Xm formed on a lower substrate (not shown) of the PDP 100, a scan driver 143 for driving scan electrodes Y1 to Yn, a sustain driver 144 for driving a sustain electrode Z, i.e., a common electrode, a sustain pulse controller 146 for controlling the width of a sustain pulse in a sub-field for representing the lowest gray level, a timing controller 141 for controlling the data driver 142, the scan driver 143, the sustain driver 144 and the sustain pulse controller 146 when the PDP is driven, and a driving voltage generator 145 for supplying driving voltages necessary for the respective drivers 142, 143 and 144.

The plasma display apparatus constructed above according to the third embodiment represents images comprised of a frame by way of a combination of at least one or more sub-fields in which driving pulses are applied to the address electrodes X1 to Xm, the scan electrodes Y1 to Yn and the sustain electrode Z in a reset period, an address period and a sustain period. The frame is divided into a plurality of sub-field groups. In the plurality of sub-field groups, the respective drivers 142, 143 and 144 are controlled such that a sustain pulse whose pulse width is controlled is supplied to the scan electrodes Y1 to Yn or the sustain electrode Z in a sustain period of at least one sub-field of the plurality of sub-field groups.

The PDP 100 has an upper substrate (not shown) and a lower substrate (not shown), which are parallel to each other with a predetermined distance therebetween. In addition, a number of electrodes such as the scan electrodes Y1 to Yn and the sustain electrode Z are formed in pairs on the upper substrate. The address electrodes X1 to Xm are formed on the lower substrate in such a way as to cross the scan electrodes Y1 to Yn and the sustain electrode Z.

The data driver 142 is supplied with data, which have undergone inverse gamma correction and error diffusion by an inverse gamma correction circuit, an error diffusion circuit and the like and then have mapped to respective sub-fields by a sub-field mapping circuit. The data driver 142 samples and latches the data in response to a data timing control signal (CTRX) from a timing controller 141 and provides the data to the address electrodes X1 to Xm.

The scan driver 143 sequentially provides scan pulses (SP) of a scan voltage (-Vy) to the scan electrodes Y1 to Yn during the address period under the control of the timing controller 141. The scan driver 143 also operates alternately with the sustain driver 144 to provide a sustain pulse (SUS) to the scan electrodes Y1 to Yn during the sustain period.

The sustain driver 144 supplies a reset waveform to the sustain electrode Z during the reset period under the control of the timing controller 141. The sustain driver 144 also provides a predetermined bias voltage to the sustain electrode Z during the address period. The sustain driver 144 operates alternately with the scan driver 143 to provide the sustain pulse (SUS) to the sustain electrode Z, during the sustain period. In addition, the sustain driver 144 provides an erase waveform, such as a ramp waveform, to the sustain electrode Z during the erase period.

During the sustain period where the scan driver 143 and the sustain driver 144 are driven, although the sustain pulse controller 146 to be described later can control the sustain pulse (SUS) to be alternately supplied to the scan electrodes Y1 to Yn and the sustain electrode Z depending on a brightness weight, i.e., a gray level value, the sustain pulse (SUS) whose pulse width is controlled is provided to the scan electrodes Y1 to Yn during a sustain period of a sub-field that represents the lowest gray level.

The term "the lowest gray level" refers to a gray level value in a sub-field having the lowest brightness weight when gray levels are represented with each brightness weight being allocated to each sub-field in the case where the plasma display apparatus is driven with it being divided into a plurality of sub-fields. To be more specific, the term refers to a gray level which is represented by providing a sustain pulse having a brightness weight of 2⁰ or less in a sustain period of a predetermined sub-field.

The sustain pulse controller 146 controls the sustain pulse provided in the sustain period depending on a gray level value of data mapped to each sub-field in response to the control signal from the timing controller 141. During a sustain period of a sub-field that represents the lowest gray level, of a number of sub-fields, a sustain pulse having a width W1, which is different from a width W2 of a sustain pulse applied during a sustain period of a sub-field that represents the remaining gray levels, is provided to the scan driver 143 and the sustain driver 144. That is, the width W1 of a sustain pulse that represents the lowest gray level is wider than a width that can generate a sustain discharge, but is narrower than the width W2 of a sustain pulse that represents the remaining gray levels. The sustain pulse for representing the lowest gray level is applied to only one of the scan electrodes Y1 to Yn and the sustain electrode Z. The width of the sustain pulse for representing the lowest gray level is set to be 3 µs or less.

3 µs, i.e., the upper limit of a width of a sustain pulse is a value that can generate a difference between gray levels compared with the amount of light radiated as a sustain pulse having a common width is supplied to the scan electrodes Y1 to Yn or the sustain electrode Z. The sustain pulse controller 146 can be built in the scan driver 143 or the sustain driver 144.

The timing controller 141 receives a vertical/horizontal sync signal and a clock signal and generates timing control signals (CTRX, CTRY, CTRZ and CTRERS3) for controlling an operating timing and synchronization of each of the drivers 142, 143, 144 and the sustain pulse controller 146 in the reset period, the address period and the sustain period. The timing controller 141 supplies the generated timing control signals (CTRX, CTRY, CTRZ and CTRERS3) to corresponding drivers 142, 143 and 144, and the sustain pulse controller 146, thereby controlling the drivers 142, 143 and 144, and the controller 146.

The data control signal (CTRX) comprises a sampling clock for sampling data, a latch control signal and a switching control signal for controlling an on/off time of an energy recovery circuit and a driving switch element. The scan control signal (CTRY) comprises a switching control signal for controlling an on/off time of an energy recovery circuit and a driving switch element within the scan driver 143. The sustain control signal (CTRZ) comprises a switching control signal for controlling an on/off time of an energy recovery circuit and a driving switch element within the sustain driver 144.

The driving voltage generator 145 generates a set-up voltage (Vsetup), a scan-common voltage (Vscan-com), a scan voltage (-Vy), a sustain voltage (Vs), a data voltage (Vd) and the like. These driving voltages may be varied depending on the composition of a discharge gas and/or the structure of a discharge cell.

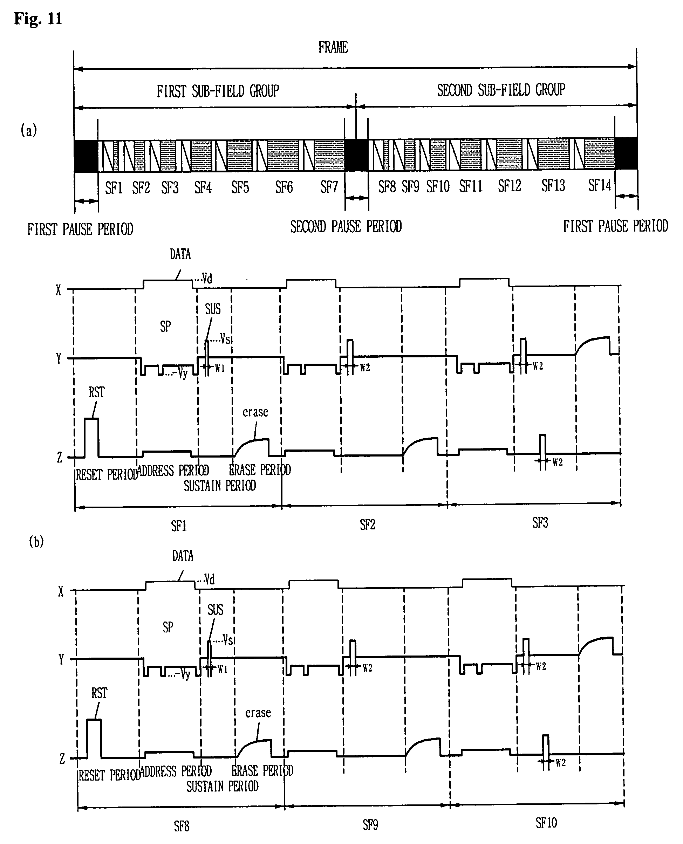

Referring to FIG. 11, in the driving method of the plasma display apparatus according to the third embodiment in the same manner as the first embodiment of the present invention, one frame is divided into a plurality of sub-field groups, each having one or more sub-fields, and a pause period having a predetermined length is comprised between the sub-field groups, as shown in FIG. 11(a). The sub-field group is time-divided into a plurality of sub-fields SF1, SF2, SF3, SF4,..., each including a reset period, an address period, a sustain period and an erase period. Each sub-field that is time-divided as described above is set to have a predetermined brightness weight.

To be more specific, the width of a sustain pulse supplied in the sub-fields SF1, SF8 having the lowest brightness weight is set to be different from the width of a sustain pulse supplied in the sub-fields SF2, SF3, SF4, ..., SF9, SF10, SF11,..., which have different brightness weights. For example, when the plasma display apparatus is driven with one frame being divided into a first sub-field group and a second sub-field group, the plasma display apparatus is driven as shown in FIG. 11(b) in each sub-field.

<First Sub-field Group>

(First Sub-field)

In the reset period of the first sub-field SF1, a positive high reset pulse or a set-up/set-down pulse (not shown) of ramp signal form, which has a predetermined slope, is supplied to the sustain electrode Z to generate a reset discharge within cells of the entire screen. As wall charges are uniformly accumulated on the cells of the entire screen by the reset discharge.

In the address period, a data pulse (DATA) is supplied to the address electrodes X, and negative scan pulses (SP) are sequentially supplied to the scan electrodes Y in synchronization with the data pulse (DATA). As the voltage difference between the scan pulse and the data pulse and a wall voltage generated in the reset period are added together, an address discharge is generated within cells to which the data pulses are provided.

In the sustain period, although a sustain pulse (SUS) can be alternately supplied to the scan electrodes Y and the sustain electrode Z, the sustain pulse is supplied to only one of the scan electrodes Y and the sustain electrode Z as shown in FIG. 11 (b). A width W1 of a sustain pulse supplied in the first sub-field SF1 is set to be narrower than a width W2 of a sustain pulse supplied in the sustain period of the remaining sub-fields SF2, SF3, SF4, SF5, SF6 and SF7. The width W1 of the sustain pulse is 3 µs or less. A numerical limit value for the width W1 of the sustain pulse is a value that can generate a difference between gray levels, compared with the amount of light radiated as the sustain pulse having the width W2, which is applied to a PDP, is supplied to the panel.

In the erase period, an erase pulse (erase) such as a ramp waveform is supplied to the electrodes Y, Z to which the sustain pulse is not supplied while the sustain pulse (SUS) is supplied to only one of the scan electrodes Y and the sustain electrode Z in the sustain period.

(Second Sub-field)

The address period of the second sub-field SF2 is the how as the address period of the first sub-field SF1. In the sustain period, although the sustain pulse (SUS) can be alternately supplied to the scan electrodes Y and the sustain electrode Z in the same manner as the first sub-field SF1, the sustain pulse (SUS) is supplied to only one of the scan electrodes Y and the sustain electrode Z so that a sustain discharge is generated, as shown in FIG. 11(a). In this case, the width W2 of the sustain pulse is the same as the width W2 of the sustain pulse that is usually supplied.

In the erase period, in the same manner as the first sub-field SF1, an erase pulse (erase), such as a ramp waveform, is supplied to the electrodes Y, Z to which the sustain pulse is not provided while the sustain pulse (SUS) is supplied to only one of the scan electrodes Y and the sustain electrode Z in the sustain period.

(Third to Seventh Sub-fields)

The address period of each of the third to seventh sub-fields SF3 to SF7 is the same as the address period of the first sub-field SF1. In addition, in the sustain period, the sustain pulse (SUS) is alternately provided to the scan electrodes Y and the sustain electrode Z. The width W2 of the sustain pulse in this case is the same as the width W2 of the sustain pulse that is usually supplied.

In the erase period, an erase pulse is applied to the scan electrodes Y.

<Second Sub-field Group>

(Eighth Sub-field)

In the reset period of the eighth sub-field SF8, a positive high reset pulse or a set-up/set-down pulse (not shown) of ramp signal form, which has a predetermined slope, is supplied to the sustain electrode Z to generate a reset discharge within cells of the entire screen. As wall charges are uniformly accumulated on the cells of the entire screen by the reset discharge.

In the address period, a data pulse (DATA) is supplied to the address electrodes X and negative scan pulses (SP) are sequentially supplied to the scan electrodes Y in synchronization with the data pulse (DATA). As the voltage difference between the scan pulse and the data pulse and a wall voltage generated in the reset period are added together, an address discharge is generated within cells to which the data pulses are provided.

In the sustain period, although the sustain pulse (SUS) can be alternately supplied to the scan electrodes Y and the sustain electrode Z, the sustain pulse (SUS) is supplied to only one of the scan electrodes Y and the sustain electrode Z, as shown in FIG. 11(b). A width W1 of the sustain pulse supplied in the sustain period of the eighth sub-field SF8 is set to be narrower than a width W2 of a sustain pulse supplied in sustain periods of the remaining sub-fields SF9, SF10, SF11, SF12, SF13 and SF14. The width W1 of the sustain pulse is 3 µs or less. A numerical limit value for the width W1 of the sustain pulse is a value that can generate a difference between gray levels, compared with the amount of light radiated as a sustain pulse having the width W2, which is applied to a PDP, is supplied to the panel.

In the erase period, an erase pulse (erase), such as a ramp waveform, is supplied to the electrodes Y, Z to which the sustain pulse is not supplied while the sustain pulse (SUS) is supplied to only one of the scan electrodes Y and the sustain electrode Z in the sustain period.

(Ninth Sub-field)

The reset period and the address period of the ninth sub-field SF9 are the same as the address period of the eighth sub-field SF8. In the sustain period, although the sustain pulse (SUS) can be alternately supplied to the scan electrodes Y and the sustain electrode Z in the same manner as the eighth sub-field SF8, the sustain pulse (SUS) is supplied to only one of the scan electrodes Y and the sustain electrode Z so that a sustain discharge is generated, as shown in FIG. 11(b). The width W2 of the sustain pulse is the same as the width W2 of a sustain pulse, which is usually supplied.

In the erase period, an erase pulse (erase), such as a ramp waveform, is supplied to the electrodes Y, Z to which the sustain pulse is not provided in the same manner as the first sub-field SF1, while the sustain pulse (SUS) is provided to only one of the scan electrodes Y and the sustain electrode Z in the sustain period.

(Tenth to Fourteenth Sub-fields)

The address period of each of the tenth to the fourteenth sub-fields SF10 to SF14 is the same as the address period of the eighth sub-field SF8. In the sustain period, the sustain pulse (SUS) is alternately supplied to the scan electrodes Y and the sustain electrode Z. The width W2 of the sustain pulse in this case is the same as the width W2 of a sustain pulse that is usually supplied.

In the erase period, an erase pulse is supplied to the scan electrodes Y.

In the plasma display apparatus that is driven as described above according to the third embodiment the sub-fields SF1, SF9 where a sustain pulse is applied to only one of the scan electrodes Y and the sustain electrode Z can represent a gray level value lower than a gray level value depending on light, which is represented in the sub-fields SF3, SF4, SF5, SF6, SF7, SF10, SF11, SF12, SF13 and SF14 where a sustain pulse is alternately applied to the scan electrodes Y and the sustain electrode Z in the prior art. Furthermore, when the sustain pulse is applied to only one of the scan electrodes and the sustain electrode, the sub-fields SF1, SF8 where a sustain pulse having a width W1 narrower than a width W2 of a sustain pulse of the sub-fields SF3, SF4, SF5, SF6, SF7, SF10, SF11, SF12, SF13 and SF14 is applied can represent a finer gray level value.

Even in the conventional driving method of the PDP, in which a gray level is represented by alternately applying a sustain pulse to the scan electrodes and the sustain electrode, a finer gray level value can be represented by narrowing the width of a sustain pulse.

In the third embodiment a pause period comprised between frames or between sub-field groups of the same frame, and the arrangement of weights of sub-fields comprised in a frame, are the same as those of the first embodiment of the present invention. Description thereof will be omitted for simplicity.

A plasma display apparatus according to a fourth embodiment comprises a plasma display panel including scan electrodes and a sustain electrode, electrode drivers for driving the scan electrodes and the sustain electrodes, respectively, and a sustain pulse controller for controlling the electrode drivers to divide one frame into a plurality of sub-field groups, each having at least one or more sub-fields, and to set a first voltage of a sustain pulse, which is supplied to the scan electrodes or the sustain electrode in a sustain period of at least one sub-field of the sub-field groups, to be less than a second voltage of a sustain pulse, which is supplied in a sustain period of the remaining sub-fields of the sub-field groups.

The sustain pulse controller sets the first voltage of the sustain pulse to be less than a sustain voltage (Vs).

The sustain pulse controller controls a sustain pulse having the first voltage to be applied to only one of the scan electrodes and the sustain electrode.

Fourth Embodiment

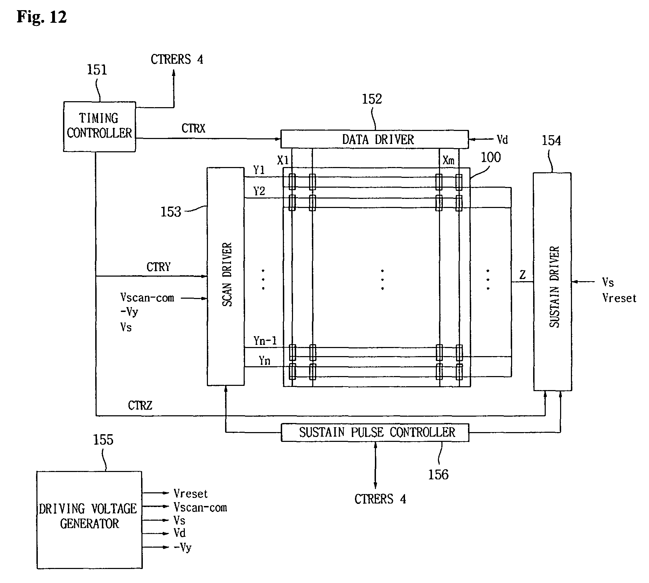

Referring to FIG. 12, the plasma display apparatus according to a fourth embodiment comprises a PDP 100, a data driver 152 for supplying data to address electrodes X1 to Xm formed on a lower substrate (not shown) of the PDP 100, a scan driver 153 for driving scan electrodes Y1 to Yn, a sustain driver 154 for driving a sustain electrode Z, i.e., a common electrode, a sustain pulse controller 156 for controlling a voltage of a sustain pulse in a sub-field for displaying the lowest gray level, a timing controller 151 for controlling the data driver 152, the scan driver 153, the sustain driver 154 and the sustain pulse controller 156 when the PDP is driven, and a driving voltage generator 155 for supplying driving voltages necessary for the respective drivers 152, 153 and 154, in the same manner as the first embodiment of the present invention.

The plasma display apparatus constructed above according to the fourth embodiment displays images comprised of a frame by way of a combination of at least one or more sub-fields in which driving pulses are applied to the address electrodes X1 to Xm, the scan electrodes Y1 to Yn and the sustain electrode Z in a reset period, an address period and a sustain period. The frame is divided into a plurality of sub-field groups. In the plurality of sub-field groups, the respective drivers 152, 153 and 154 are controlled such that a sustain pulse whose voltage is controlled is applied to the scan electrodes Y1 to Yn or the sustain electrode Z in a sustain period of at least one sub-field of the plurality of sub-field groups.

In the same manner as the first embodiment the PDP 100 comprises an upper substrate (not shown) and a lower substrate (not shown), which are parallel to each other with a predetermined distance therebetween. A number of electrodes such as the scan electrodes Y1 to Yn and the sustain electrode Z are formed in pairs on the upper substrate. The address electrodes X1 to Xm are formed on the lower substrate to intersect the scan electrodes Y1 to Yn and the sustain electrode Z.

The data driver 152 is supplied with data, which have undergone inverse gamma correction and error diffusion by an inverse gamma correction circuit, an error diffusion circuit and the like and then have mapped to respective sub-fields by a sub-field mapping circuit. The data driver 152 samples and latches the data in response to a data timing control signal (CTRX) from the timing controller 151 and provides the data to the address electrodes X1 to Xm.

The scan driver 153 sequentially provides scan pulses (SP) of a scan voltage (-Vy) to the scan electrodes Y1 to Yn during the address period under the control of the timing controller 151. The scan driver 153 also operates alternately with the sustain driver 154 to provide a sustain pulse (SUS) to the scan electrodes Y1 to Yn during the sustain period.

The sustain driver 154 supplies a reset waveform to the sustain electrode Z during the reset period under the control of the timing controller 151. The sustain driver 154 also provides a predetermined bias voltage to the sustain electrode Z during the address period and alternately operates with the scan driver 153 to provide the sustain pulse (SUS) to the sustain electrode Z during the sustain period. The sustain driver 154 provides an erase waveform, such as a ramp waveform, to the sustain electrode Z during the erase period.

During the sustain period where the scan driver 153 and the sustain driver 154 are driven, although the sustain pulse controller 156 to be described later can control the sustain pulse (SUS) to be alternately supplied to the scan electrodes Y1 to Yn and the sustain electrode Z depending on a brightness weight, i.e., a gray level value, the sustain pulse controller 156 controls a sustain pulse (SUS) whose voltage is to be provided to the scan electrodes Y1 to Yn during a sustain period of a sub-field that displays the lowest gray level.

The term "the lowest gray level" refers to a gray level value in a sub-field having the lowest brightness weight when gray levels are represented with each brightness weight being allocated to each sub-field in the case where the plasma display apparatus is driven with it being divided into a plurality of sub-fields. To be more specific, the term refers to a gray level which is represented by providing a sustain pulse having a brightness weight of 2⁰ or less in a sustain period of a predetermined sub-field.

The sustain pulse controller 156 controls a sustain pulse voltage (Vs) applied in the sustain period depending on a gray level value of data mapped to each sub-field in response to a control signal from the timing controller 151. During a sustain period of a sub-field that displays the lowest gray level, of a plurality of sub-fields, the sustain pulse controller 156 controls a sustain pulse having a voltage (Vs-ΔV), which is different from a voltage (Vs) of a sustain pulse applied during a sustain period of a sub-field that displays the remaining gray levels, to be provided to the scan driver 153 and the sustain driver 154. The voltage of the sustain pulse that displays the lowest gray level is higher than a discharge firing voltage, but lower than the voltage (Vs) of the sustain pulse that displays the remaining gray levels. In addition, the sustain pulse for displaying the lowest gray level is applied to only one of the scan electrodes Y1 to Yn and the sustain electrode Z. The sustain pulse controller 156 can be built in the scan driver 153 or the sustain driver 154.

The timing controller 151 receives a vertical/horizontal sync signal and a clock signal and generates timing control signals (CTRX, CTRY, CTRZ and CTRERS4) for controlling an operating timing and synchronization of each of the drivers 152, 153, 154 and the sustain pulse controller 156 in a reset period, an address period and a sustain period. The timing controller 151 supplies the generated timing control signals (CTRX, CTRY, CTRZ and CTRERS4) to corresponding drivers 152, 153 and 154, and the sustain pulse controller 156, thereby controlling the drivers 152, 153 and 154, and the controller 156.

The data control signal (CTRX) comprises a sampling clock for sampling data, a latch control signal and a switching control signal for controlling an on/off time of an energy recovery circuit and a driving switch element. The scan control signal (CTRY) comprises a switching control signal for controlling an on/off time of an energy recovery circuit and a driving switch element within the scan driver 153. The sustain control signal (CTRZ) comprises a switching control signal for controlling an on/off time of an energy recovery circuit and a driving switch element within the sustain driver 154. The sustain pulse voltage control signal (CTRRES4) comprises a control signal of a switch element, for selecting a voltage of a sustain pulse.

The driving voltage generator 155 generates a set-up voltage (Vsetup), a scan-common voltage (Vscan-com), a scan voltage (-Vy), a sustain voltage (Vs), a data voltage (Vd), a voltage (Vs-ΔV) lower than the sustain voltage (Vs), and so on. These driving voltages may be varied depending on the composition of the discharge gas and/or the structure of a discharge cell.

Referring to FIG. 13, in the driving method of the plasma display apparatus according to the fourth embodiment in the same manner as the first embodiment one frame is divided into a plurality of sub-field groups, each including one or more sub-fields, and a pause period having a predetermined length is comprised between the respective sub-field groups, as shown in FIG. 13(a). The sub-field group is time-divided into a plurality of sub-fields SF1, SF2, SF3, SF4,..., each including a reset period, an address period, a sustain period and an erase period. Each sub-field that is time-divided as described above is set to have a predetermined brightness weight.

A voltage of a sustain pulse supplied in the sub-field SF1 having the lowest brightness weight is set to be different from voltages of sustain pulses supplied in the sub-fields SF2, SF3, SF4, ..., SF9, SF10, SF11,... having different brightness weights. For example, when the plasma display apparatus is driven with one frame being divided into a first sub-field group and a second sub-field group, the plasma display apparatus is driven as shown in FIG. 13(b) in each sub-fields.

<First Sub-field Group>

(First Sub-field)

In the reset period of the first sub-field SF1, a positive high reset pulse or a set-up/set-down pulse (not shown) of ramp signal form, which has a predetermined slope, is supplied to the sustain electrode Z to generate a reset discharge within cells of the entire screen. As wall charges are uniformly accumulated on the cells of the entire screen by the reset discharge.

In the address period, a data pulse (DATA) is supplied to the address electrodes X, and negative scan pulses (SP) are sequentially supplied to the scan electrodes Y in synchronization with the data pulse (DATA). As the voltage difference between the scan pulse and the data pulse and a wall voltage generated in the reset period are added together, an address discharge is generated within cells to which the data pulses are provided.

In the sustain period, although a sustain pulse (SUS) can be alternately supplied to the scan electrodes Y and the sustain electrode Z, the sustain pulse (SUS) is supplied to only one of the scan electrodes Y and the sustain electrode Z, as shown in FIG. 13(b). A voltage (Vs-ΔV) of the sustain pulse (SUS) is set to be lower than a voltage (Vs) of a sustain pulse applied in a sustain period of the remaining sub-fields SF2, SF3, SF4, SF5, SF6 and SF7. In this case, the voltage (Vs-ΔV) of the sustain pulse must be higher than a voltage (Vf) for firing a discharge.

In the erase period, an erase pulse (erase), such as a ramp waveform, is supplied to the electrodes Y, Z to which the sustain pulse is not supplied while the sustain pulse (SUS) is supplied to only one of the scan electrodes Y and the sustain electrode Z in the sustain period.

(Second Sub-field)

The address period of the second sub-field SF2 is the how as the address period of the first sub-field SF1. In the sustain period, although the sustain pulse (SUS) can be alternately supplied to the scan electrodes Y and the sustain electrode Z in the same manner as the first sub-field SF1, the sustain pulse (SUS) is supplied to only one of the scan electrodes Y and the sustain electrode Z so that a sustain discharge is generated, as shown in FIG. 13(b). A voltage (Vs) of the sustain pulse in the sustain period of the second sub-field SF2 is the same as a voltage (Vs) of a sustain pulse that is usually supplied.

In the erase period, an erase pulse (erase), such as a ramp waveform, is supplied to the electrodes Y, Z to which the sustain pulse is not provided while the sustain pulse (SUS) is supplied to only one of the scan electrodes Y and the sustain electrode Z in the sustain period, in the same manner as the first sub-field SF1.

(Third to Seventh Sub-fields)

The address period of each of the third to seventh sub-fields SF3 to SF7 is the how as the address period of the first sub-field SF1. In the sustain period, the sustain pulse (SUS) is alternately provided to the scan electrodes Y and the sustain electrode Z. The voltage (Vs) of the sustain pulse is the same as the voltage (Vs) of the sustain pulse that is usually supplied.

In the erase period, an erase pulse is applied to the scan electrodes Y.

<Second Sub-field Group>

(Eighth Sub-field)

In the reset period of the eighth sub-field SF8, a positive reset pulse or a set-up/set-down pulse (not shown) of ramp signal form, which has a predetermined slope, is supplied to the sustain electrode Z to generate a reset discharge within cells of the entire screen. As wall charges are uniformly accumulated on the cells of the entire screen by the reset discharge.

In the address period, a data pulse (DATA) is supplied to the address electrodes X, and negative scan pulses (SP) are sequentially supplied to the scan electrodes Y in synchronization with the data pulse (DATA). As the voltage difference between the scan pulse and the data pulse and a wall voltage generated in the reset period are added together, an address discharge is generated within cells to which the data pulses are provided.

In the sustain period, although the sustain pulse (SUS) can be alternately supplied to the scan electrodes Y and the sustain electrode Z, the sustain pulse (SUS) is supplied to only one of the scan electrodes Y and the sustain electrode Z as shown in FIG. 13(b). A voltage (Vs-ΔV) of the sustain pulse is set to be lower than a voltage (Vs) of a sustain pulse applied in a sustain period of the remaining sub-fields SF9, SF10, SF11, SF12, SF13 and SF14. The voltage (Vs-ΔV) of the sustain pulse must be higher than a voltage (Vf) for firing a discharge.

In the erase period, an erase pulse (erase), such as a ramp waveform, is supplied to the electrodes Y, Z to which the sustain pulse is not supplied while the sustain pulse (SUS) is supplied to only one of the scan electrodes Y and the sustain electrode Z in the sustain period.

(Ninth Sub-field)

The address period of the ninth sub-field SF9 is the how as the address period of the eighth sub-field SF8. In the sustain period, although the sustain pulse (SUS) can be alternately supplied to the scan electrodes Y and the sustain electrode Z in the same manner as the eighth sub-field SF8, the sustain pulse (SUS) is supplied to only one of the scan electrodes Y and the sustain electrode Z so that a sustain discharge is generated, as shown in FIG. 13(b). The voltage (Vs) of the sustain pulse is the same as the voltage (Vs) of a sustain pulse that is usually supplied.

In the erase period, in the same manner as the first sub-field SF1, an erase pulse (erase), such as a ramp waveform, is supplied to the electrodes Y, Z to which the sustain pulse is not provided while the sustain pulse (SUS) is provided to only one of the scan electrodes Y and the sustain electrode Z in the sustain period.

(Tenth to Fourteenth Sub-fields)

The address period of each of the tenth to fourteenth sub-fields SF10 to SF14 is the how as the address period of the eighth sub-field SF8. In the sustain period, the sustain pulse (SUS) is alternately supplied to the scan electrodes Y and the sustain electrode Z. The voltage (Vs) of the sustain pulse is the same as the voltage (Vs) of a sustain pulse that is usually supplied.

In the erase period, an erase pulse is applied to the scan electrodes Y.

In the plasma display apparatus that is driven as described above according to the fourth embodiment the sub-fields SF1, SF9 in which a sustain pulse is applied to only one of the scan electrodes Y and the sustain electrode Z can represent a gray level value lower than a gray level value depending on light, which is represented in the sub-fields SF3, SF4, SF5, SF6, SF7, SF10, SF11, SF12, SF13 and SF14 in which a sustain pulse is alternately applied to the scan electrodes Y and the sustain electrode Z in the prior art. When a sustain pulse is applied to only one of the scan electrodes and the sustain electrode, the sub-fields SF1, SF8 in which a sustain pulse having a voltage (Vs-ΔV) lower than the voltage (Vs) of the sustain pulse of the sub-fields SF3, SF4, SF5, SF6, SF7, SF10, SF11, SF12, SF13 and SF14 is applied can represent a finer gray level value.

Even in the conventional driving method of the PDP, in which a gray level is represented by alternately applying a sustain pulse to the scan electrodes and the sustain electrode, a finer gray level value can be represented by lowering a sustain pulse voltage.

In the fourth embodiment a pause period comprised between frames or between sub-field groups of the same frame, and the arrangement of the weights of the sub-fields comprised in a frame are the same as those of the first embodiment. Description thereof will be omitted for simplicity.

A plasma display apparatus according to a fifth embodiment comprises a plasma display panel including scan electrodes and a sustain electrode, electrode drivers for driving the scan electrodes and the sustain electrodes, respectively, and a sustain pulse controller for controlling the electrode drivers to divide one frame into a plurality of sub-field groups, each having at least one or more sub-fields, and to set a first slope of a sustain pulse, which is supplied to the scan electrodes or the sustain electrode in a sustain period of at least one sub-field of the sub-field groups, to be smaller than a second slope of a sustain pulse, which is supplied in a sustain period of the remaining sub-fields of the sub-field groups.

The sustain pulse controller controls the first slope of the sustain pulse to be 50V/µs or less.

The sustain pulse controller controls the sustain pulse having the first slope to be applied to only one of the scan electrodes and the sustain electrode.

Referring to FIG. 14, a plasma display apparatus according to a fifth embodiment comprises a PDP 100, a data driver 162 for supplying data to address electrodes X1 to Xm formed on a lower substrate (not shown) of the PDP 100, a scan driver 163 for driving scan electrodes Y1 to Yn, a sustain driver 164 for driving a sustain electrode Z, i.e., a common electrode, a sustain pulse controller 166 for controlling a slope of a sustain pulse in a sub-field for representing the lowest gray level, a timing controller 161 for controlling the data driver 162, the scan driver 163, the sustain driver 164 and the sustain pulse controller 166 when the PDP is driven, and a driving voltage generator 165 for supplying driving voltages necessary for the respective drivers 162, 163 and 164.

The plasma display apparatus constructed above according to the fifth embodiment displays images comprised of a frame by way of a combination of at least one or more sub-fields in which a driving pulse is applied to the address electrodes X1 to Xm, the scan electrodes Y1 to Yn, and the sustain electrode Z in a reset period, an address period and a sustain period. The frame is divided into a plurality of sub-field groups. In the plurality of sub-field groups, the drivers 162, 163 and 164 are controlled so that a sustain pulse whose slope is controlled is applied to the scan electrodes Y1 to Yn or the sustain electrode Z in a sustain period of at least one sub-field of the plurality of sub-field groups.

In the same manner as the first embodiment the PDP 100 has an upper substrate (not shown) and a lower substrate (not shown), which are parallel to each other with a predetermined distance therebetween. A number of electrodes such as the scan electrodes Y1 to Yn and the sustain electrode Z are formed in pairs on the upper substrate. The address electrodes X1 to Xm are formed on the lower substrate to intersect the scan electrodes Y1 to Yn and the sustain electrode Z.

The data driver 162 is supplied with data, which have undergone inverse gamma correction and error diffusion by an inverse gamma correction circuit, an error diffusion circuit, etc., and then have mapped to respective sub-fields by a sub-field mapping circuit. The data driver 162 samples and latches the data in response to a data timing control signal (CTRX) from a timing controller 161 and provides the data to the address electrodes X1 to Xm.

The scan driver 163 sequentially provides scan pulses (SP) of a scan voltage (-Vy) to the scan electrodes Y1 to Yn during the address period under the control of the timing controller 161. The scan driver 163 also operates alternately with the sustain driver 164 to provide a sustain pulse (SUS) to the scan electrodes Y1 to Yn during the sustain period.

The sustain driver 164 supplies a reset waveform to the sustain electrode Z during the reset period under the control of the timing controller 161. The sustain driver 164 also provides a predetermined bias voltage to the sustain electrode Z during the address period and alternately operates with the scan driver 163 to provide the sustain pulse (SUS) to the sustain electrode Z during the sustain period. The sustain driver 164 provides an erase waveform, such as a ramp waveform, to the sustain electrode Z during the erase period.

During the sustain period where the scan driver 163 and the sustain driver 164 are driven, although the sustain pulse controller 166 to be described later can control the sustain pulse (SUS) to be alternately supplied to the scan electrodes Y1 to Yn and the sustain electrode Z depending on a brightness weight, i.e., a gray level value, the sustain pulse controller 166 controls the sustain pulse (SUS) whose slope is controlled to be supplied to the scan electrodes Y1 to Yn during a sustain period of a sub-field that displays the lowest gray level.

The term "the lowest gray level" refers to a gray level value in a sub-field having the lowest brightness weight when gray levels are represented with each brightness weight being allocated to each sub-field in the case where the plasma display apparatus is driven with it being divided into a plurality of sub-fields. To be more specific, the term refers to a gray level which is represented by providing a sustain pulse having a brightness weight of 2° or less in a sustain period of a predetermined sub-field.

The sustain pulse controller 166 controls a slope of a sustain pulse, which is supplied in the sustain period, depending on a gray level value of data mapped to each sub-field, in response to a control signal from the timing controller 161. During the sustain period of the sub-field that displays the lowest gray level, of a number of sub-fields, the sustain pulse controller 166 controls a sustain pulse having a slope, which is different from a slope of a sustain pulse applied during a sustain period of a sub-field that displays the remaining gray levels, to be supplied to the scan driver 163 and the sustain driver 164.

The slope of the sustain pulse that displays the lowest gray level is controlled to be less than the slope of a sub-field that displays the remaining gray levels. The sustain pulse for displaying the lowest gray level is supplied to only one of the scan electrodes Y1 to Yn and the sustain electrode Z. The sustain pulse controller 166 can be built in the scan driver 163 or the sustain driver 164.

The timing controller 161 receives a vertical/horizontal sync signal and a clock signal and generates timing control signals (CTRX, CTRY, CTRZ and CTRERS5) for controlling an operating timing and synchronization of each of the drivers 162, 163, 164 and the sustain pulse controller 166 in a reset period, an address period and a sustain period. The timing controller 161 supplies the generated timing control signals (CTRX, CTRY, CTRZ and CTRERS5) to corresponding drivers 162, 163 and 164, and the sustain pulse controller 166, thereby controlling the drivers 162, 163 and 164, and the controller 166.

The data control signal (CTRX) comprises a sampling clock for sampling data, a latch control signal, and a switching control signal for controlling an on/off time of an energy recovery circuit and a driving switch element. The scan control signal (CTRY) comprises a switching control signal for controlling an on/off time of an energy recovery circuit and a driving switch element within the scan driver 163. The sustain control signal (CTRZ) comprises a switching control signal for controlling an on/off time of an energy recovery circuit and a driving switch element within the sustain driver 164. In addition, the slope control signal (CTRRES5) of a sustain pulse comprises a control signal of a switch element, for selecting a slope of a sustain pulse.

The driving voltage generator 165 generates a set-up voltage (Vsetup), a scan-common voltage (Vscan-com), a scan voltage (-Vy), a sustain voltage (Vs), a data voltage (Vd) and so on. These driving voltages may vary depending on the composition of a discharge gas and/or the structure of a discharge cell.

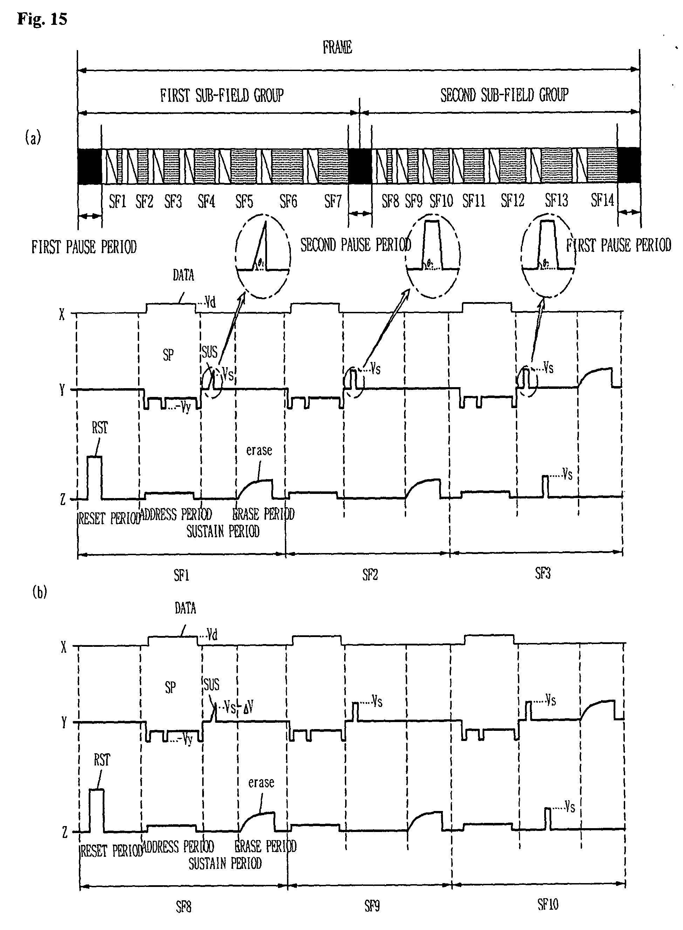

Referring to FIG. 15, in the driving method of a plasma display apparatus according to the fifth embodiment as shown in FIG. 15(a), one frame is divided into a plurality of sub-field groups, each having one or more sub-fields, and a pause period having a predetermined length is comprised between the respective sub-field groups in the same manner as the first embodiment of the present invention. The sub-field group is time-divided into a plurality of sub-fields SF1, SF2, SF3, SF4,..., each including a reset period, an address period, a sustain period and an erase period. Each sub-field that is time-divided as described above is set to have a predetermined brightness weight.

To be more specific, a slope of a sustain pulse supplied in the sub-field SF1 having the lowest brightness weight is set to be different from a slope of a sustain pulse supplied in the remaining sub-fields SF2, SF3, SF4, ..., SF9, SF10, SF11,... having different brightness weights. For example, when the plasma display apparatus is driven with one frame being divided into a first sub-field group and a second sub-field group, the plasma display apparatus is driven as shown in FIG. 15(b) in each sub-field.

<First Sub-field Group>

(First Sub-field)

In the reset period of the first sub-field SF1, a positive reset pulse or a set-up/set-down pulse (not shown) of ramp signal form, which has a predetermined slope, is supplied to the sustain electrode Z to generate a reset discharge within cells of the entire screen. As wall charges are uniformly accumulated on the cells of the entire screen by the reset discharge.

In the address period, a data pulse (DATA) is supplied to the address electrodes X, and negative scan pulses (SP) are sequentially supplied to the scan electrodes Y in synchronization with the data pulse (DATA). As the voltage difference between the scan pulse and the data pulse and a wall voltage generated in the reset period are added together, an address discharge is generated within cells to which the data pulses are provided.

In the sustain period, although the sustain pulse (SUS) can be alternately supplied to the scan electrodes Y and the sustain electrode Z, the sustain pulse (SUS) is supplied to only one of the scan electrodes Y and the sustain electrode Z as shown in FIG. 15(b). A slope (θ1) of the sustain pulse supplied in the sustain period of the first sub-field SF1 is set to be less than a slope (θ2) of a sustain pulse supplied in a sustain period of the remaining sub-fields SF2, SF3, SF4, SF5, SF6 and SF7.

That is, a sustain pulse having the slope (θ1) of 50V/µs or less is supplied to only one of the scan electrodes and the sustain electrode. 50V/µs, i.e., the upper limit value of the slope (θ1) of the sustain pulse is a value that can generate a difference between gray levels, compared with the amount of light emitted as a sustain pulse having a general slope is supplied to the scan electrodes Y1 to Yn or the sustain electrode Z.

In the erase period, an erase pulse (erase,) such as a ramp waveform, is supplied to the electrodes Y, Z to which the sustain pulse is not supplied while the sustain pulse (SUS) is supplied to only one of the scan electrodes Y and the sustain electrode Z in the sustain period.

(Second Sub-field)

The address period of the second sub-field SF2 is the how as the address period of the first sub-field SF1. In the sustain period, although the sustain pulse (SUS) can be alternately supplied to the scan electrodes Y and the sustain electrode Z in the same manner as the first sub-field SF1, the sustain pulse (SUS) is supplied to only one of the scan electrodes Y and the sustain electrode Z so that a sustain discharge is generated, as shown in FIG. 15(b). The slope (θ2) of the sustain pulse is the same as the slope of the sustain pulse that is usually supplied.

In the erase period, in the same manner as the first sub-field SF1, an erase pulse (erase), such as a ramp waveform, is supplied to the electrodes Y, Z to which the sustain pulse is not provided while the sustain pulse (SUS) is supplied to only one of the scan electrodes Y and the sustain electrode Z in the sustain period.

(Third to Seventh Sub-fields)

The address period of each of the third to seventh sub-fields SF3 to SF7 is the how as the address period of the first sub-field SF1. In the sustain period, the sustain pulse (SUS) is alternately provided to the scan electrodes Y and the sustain electrode Z. A slope of the sustain pulse is the same as a slope of a sustain pulse that is usually supplied.

In the erase period, an erase pulse is applied to the scan electrodes Y.

<Second Sub-field Group>

(Eighth Sub-field)

In the reset period of the eighth sub-field SF8, a positive reset pulse or a set-up/set-down pulse (not shown) of ramp signal form, which has a predetermined slope, is supplied to the sustain electrode Z to generate a reset discharge within cells of the entire screen. As wall charges are uniformly accumulated on the cells of the entire screen by the reset discharge.

In the address period, a data pulse (DATA) is supplied to the address electrodes X, and negative scan pulses (SP) are sequentially supplied to the scan electrodes Y in synchronization with the data pulse (DATA). As the voltage difference between the scan pulse and the data pulse and a wall voltage generated in the reset period are added together, an address discharge is generated within cells to which the data pulses are provided.

In the sustain period, although the sustain pulse (SUS) can be alternately supplied to the scan electrodes Y and the sustain electrode Z, the sustain pulse (SUS) is supplied to only one of the scan electrodes Y and the sustain electrode Z, as shown in FIG. 15(b). A slope (θ1) of the sustain pulse is set to be less than a slope (θ2) of a sustain pulse supplied in the sustain period of the remaining sub-fields SF9, SF10, SF11, SF12, SF13 and SF14. That is, a sustain pulse having the slope (θ1) of 50V/µs or less is supplied to only one of the scan electrodes and the sustain electrode. 50V/µs, i.e., the upper limit value of the slope (θ1) of such a sustain pulse is a value that can generate a difference between gray levels, compared with the amount of light emitted as a sustain pulse having a general slope is supplied to the scan electrodes Y1 to Yn or the sustain electrode Z.

In the erase period, an erase pulse (erase), such as a ramp waveform, is supplied to the electrodes Y, Z to which the sustain pulse is not supplied while the sustain pulse (SUS) is supplied to only one of the scan electrodes Y and the sustain electrode Z in the sustain period.

(Ninth Sub-field)

The address period of the ninth sub-field SF9 is the how as the address period of the eighth sub-field SF8. In the sustain period, although the sustain pulse (SUS) can be alternately supplied to the scan electrodes Y and the sustain electrode Z in the same manner as the eighth sub-field SF8, the sustain pulse (SUS) is supplied to only one of the scan electrodes Y and the sustain electrode Z so that a sustain discharge is generated, as shown in FIG. 15(b). A slope (θ2) of such a sustain pulse is the same as a slope of a sustain pulse that is usually supplied.

In the erase period, in the same manner as the first sub-field SF1, an erase pulse (erase), such as a ramp waveform, is supplied to the electrodes Y, Z in which a sustain pulse is not provided while the sustain pulse (SUS) is provided to only one of the scan electrodes Y and the sustain electrode Z in the sustain period.

(Tenth to Fourteenth Sub-fields)

The address period of each of the tenth to fourteenth sub-fields SF10 to SF14 is the how as the address period of the eighth sub-field SF8. In the sustain period, the sustain pulse (SUS) is alternately supplied to the scan electrodes Y and the sustain electrode Z. A slope of the sustain pulse is the same as a slope of a sustain pulse that is usually supplied.

In the erase period, an erase pulse is supplied to the scan electrodes Y.

In the plasma display apparatus that is driven as described above according to a fifth embodiment of the present invention, the sub-fields SF1, SF9 in which the sustain pulse (SUS) is supplied to only one of the scan electrodes Y and the sustain electrode Z can represent a gray level value less than a gray level value depending on light, which is represented in the sub-fields SF3, SF4, SF5, SF6, SF7, SF10, SF11, SF12, SF13 and SF14 where the sustain pulse is alternately applied to the scan electrodes Y and the sustain electrode Z in the prior art. When the sustain pulse is applied to only one of the scan electrodes and the sustain electrode, the sub-fields SF1, SF8 in which a sustain pulse having a slope (θ1) less than a slope (θ2) of a sustain pulse of the sub-fields SF3, SF4, SF5, SF6, SF7, SF10, SF11, SF12, SF13 and SF14 is applied can represent a finer gray level value.

Even in the conventional driving method of the PDP in which a gray level is represented by alternately applying a sustain pulse to the scan electrodes and the sustain electrode, a finer gray level value can be represented by decreasing a slope of the sustain pulse.

In the fifth embodiment a pause period comprised between frames or between sub-field groups of the same frame, and the arrangement of weights of sub-fields comprised in the frame are the same as those of the first embodiment of the present invention. Description thereof will be omitted for simplicity.

As described above, in the PAL driving method, a finer gray level can be represented by assigning a brightness weight less than a natural number to a sub-field. Accordingly, the present invention is advantageous in that the picture quality of a PDP improves.

While the present invention has been described with reference to the particular illustrative embodiments, it is not to be restricted by the embodiments but only by the claims. It is to be appreciated that those skilled in the art can change or modify the embodiments without departing from the scope of the present invention.

## Claims

1. A plasma display apparatus displaying an image in a frame having a plurality of subfield groups, the plasma display apparatus comprising:
a plasma display panel comprising a scan electrode and a sustain electrode;
a sustain pulse controller for applying a sustain pulse to either the scan electrode or the sustain electrode in a sustain period of at least one sub-field.

2. A plasma display apparatus displaying an image in a frame having a plurality of subfield groups, the plasma display apparatus comprising:
a plasma display panel comprising a scan electrode and a sustain electrode;
a sustain pulse controller for maintaining a voltage level of either the scan electrode or the sustain electrode to a ground voltage level in a sustain period of at least one sub-field.

3. A plasma display apparatus displaying an image in a frame having a plurality of subfield groups, the plasma display apparatus comprising:
a plasma display panel comprising a scan electrode and a sustain electrode;
a sustain pulse controller for setting a width of a first sustain pulse applied to the scan electrodes or the sustain electrode in a sustain period of at least one sub-field of the sub-field groups, to be different from a width of a second sustain pulse applied in a sustain period of the remaining sub-fields of the sub-field groups.

4. A plasma display apparatus displaying an image in a frame having a plurality of subfield groups, the plasma display apparatus comprising:
a plasma display panel comprising a scan electrode and a sustain electrode;
a sustain pulse controller for setting a voltage of a first sustain pulse applied to the scan electrodes or the sustain electrode in a sustain period of at least one sub-field of the sub-field groups, to be different from a voltage of a second sustain pulse applied in a sustain period of the remaining sub-fields of the sub-field groups.

5. A plasma display apparatus displaying an image in a frame having a plurality of subfield groups, the plasma display apparatus comprising:
a plasma display panel comprising a scan electrode and a sustain electrode;
a sustain pulse controller for setting a slope of a first sustain pulse applied to the scan electrodes or the sustain electrode in a sustain period of at least one sub-field of the sub-field groups, to be different from a slope of a second sustain pulse applied in a sustain period of the remaining sub-fields of the sub-field groups.

6. The plasma display apparatus as claimed in any one of claims 1 to 5, wherein an idle period having a predetermined length is comprised between frames and subfield groups of the frame is continuously arranged within the same frame.

7. The plasma display apparatus as claimed in any one of claims 1 to 5, wherein a first idle period having a predetermined length is comprised between frames and a second idle period having a predetermined length is further comprised between the subfield groups within the same frame.

8. The plasma display apparatus as claimed in claim 7, wherein lengths of the first idle period and the second idle period are the same.

9. The plasma display apparatus as claimed in any one of claims 1 to 5, wherein the plurality of subfield groups comprise a plurality of subfields and the plurality of subfield groups are arranged in the increasing order of a gray level value of subfields within each group.

10. The plasma display apparatus as claimed in any one of claims 1 to 5, wherein the plurality of subfield groups comprise a plurality of subfields and the plurality of subfield groups are arranged in the decreasing order of a gray level value of subfields within each group.

11. The plasma display apparatus as claimed in any one of claims 1 to 5, wherein the frame is divided into two subfield groups, each of two subfield groups comprises a plurality of subfields, the two subfield groups are arranged in the size order of a different gray level value of subfields within each subfield group.

12. The plasma display apparatus as claimed in claim 11, wherein any one of the two subfield groups is arranged in the increasing order of a gray level value of subfields within each group.

13. The plasma display apparatus as claimed in claim 11, wherein any one of the two subfield groups is arranged in the decreasing order of a gray level value of subfields within each group.

14. The plasma display apparatus as claimed in claim 11, wherein any one of the two subfield groups is arranged in the decreasing order of a gray level value of subfields within each group and the other one of the two subfield groups is arranged in the increasing order of a gray level value of subfields within each group.

15. The plasma display apparatus as claimed in claim 3, wherein the sustain pulse controller controls the width of the first sustain pulse to be 3 µs or less.

16. The plasma display apparatus as claimed in claim 3 or 15, wherein the sustain pulse controller controls the width of the first sustain pulse to be applied to either the scan electrodes or the sustain electrode.

17. The plasma display apparatus as claimed in claim 4, wherein the sustain pulse controller controls the voltage of the first sustain pulse to be lower than a sustain voltage (Vs).

18. The plasma display apparatus as claimed in claim 4 or 17, wherein the sustain pulse controller controls the voltage of the first sustain pulse to be applied to either the scan electrodes or the sustain electrode.

19. The plasma display apparatus as claimed in claim 5, wherein the sustain pulse controller controls the slope of the first sustain pulse to be 50V/µs or less.

20. The plasma display apparatus as claimed in claim 5 or 19, wherein the sustain pulse controller controls the first sustain pulse to be applied to either the scan electrodes or the sustain electrode.

21. A driving apparatus of a plasma display panel displaying an image in a frame having a plurality of subfield groups, the driving apparatus of a plasma display panel comprising:
a sustain pulse controller for applying a sustain pulse to either the scan electrode or the sustain electrode in a sustain period of at least one sub-field.

22. A driving apparatus of a plasma display panel displaying an image in a frame having a plurality of subfield groups, the driving apparatus of a plasma display panel comprising:
a sustain pulse controller for maintaining a voltage level of either the scan electrode or the sustain electrode to a ground voltage level in a sustain period of at least one sub-field.

23. A driving apparatus of a plasma display panel displaying an image in a frame having a plurality of subfield groups, the driving apparatus of a plasma display panel comprising:
a sustain pulse controller for setting a width of a first sustain pulse applied in a sustain period of at least one sub-field of the sub-field groups, to be different from a width of a second sustain pulse applied in a sustain period of the remaining sub-fields of the sub-field groups.

24. A driving apparatus of a plasma display panel displaying an image in a frame having a plurality of subfield groups, the driving apparatus of a plasma display panel comprising:
a sustain pulse controller for setting a voltage of a first sustain pulse applied to the scan electrodes or the sustain electrode in a sustain period of at least one sub-field of the sub-field groups, to be different from a voltage of a second sustain pulse applied in a sustain period of the remaining sub-fields of the sub-field groups.

25. A driving apparatus of a plasma display panel displaying an image in a frame having a plurality of subfield groups, the driving apparatus of a plasma display panel comprising:
a sustain pulse controller for setting a slope of a first sustain pulse applied to the scan electrodes or the sustain electrode in a sustain period of at least one sub-field of the sub-field groups, to be different from a slope of a second sustain pulse applied in a sustain period of the remaining sub-fields of the sub-field groups.

26. A plasma display panel displaying an image in a frame having a plurality of subfield groups, the plasma display panel comprising:
a scan electrode and a sustain electrode;
wherein a sustain pulse is applied to either the scan electrode or the sustain electrode in a sustain period of at least one sub-field.

27. A plasma display panel displaying an image in a frame having a plurality of subfield groups, the plasma display panel comprising:
a scan electrode and a sustain electrode;
wherein a voltage level of either the scan electrode or the sustain electrode is a ground voltage level in a sustain period of at least one sub-field.

28. A plasma display panel displaying an image in a frame having a plurality of subfield groups, the plasma display panel comprising:
a scan electrode and a sustain electrode;
wherein a width of a first sustain pulse applied to the scan electrode or the sustain electrode in a sustain period of at least one sub-field of the sub-field groups is different from a width of a second sustain pulse applied to the scan electrode or the sustain electrode in a sustain period of the remaining sub-fields of the sub-field groups.

29. A plasma display panel displaying an image in a frame having a plurality of subfield groups, the plasma display panel comprising:
a scan electrode and a sustain electrode;
wherein a voltage of a first sustain pulse applied to the scan electrode or the sustain electrode in a sustain period of at least one sub-field of the sub-field groups is different from a voltage of a second sustain pulse applied to the scan electrode or the sustain electrode in a sustain period of the remaining sub-fields of the sub-field groups.

30. A plasma display panel displaying an image in a frame having a plurality of subfield groups, the plasma display panel comprising:
a scan electrode and a sustain electrode;
wherein a slope of a first sustain pulse applied to the scan electrodes or the sustain electrode in a sustain period of at least one sub-field of the sub-field groups is different from a slope of a second sustain pulse applied to the scan electrodes or the sustain electrode in a sustain period of the remaining sub-fields of the sub-field groups.

31. A method of driving a plasma display apparatus displaying an image in a frame having a plurality of subfield groups, the method comprising:
applying a sustain pulse to either a scan electrode or a sustain electrode in a sustain period of at least one sub-field.

32. A method of driving a plasma display apparatus displaying an image in a frame having a plurality of subfield groups, the method comprising:
maintaining a voltage level of either a scan electrode or a sustain electrode to a ground voltage level in a sustain period of at least one sub-field.

33. A method of driving a plasma display apparatus displaying an image in a frame having a plurality of subfield groups, the method comprising:
setting a width of a first sustain pulse applied to a scan electrode or a sustain electrode in a sustain period of at least one sub-field of the sub-field groups, to be different from a width of a second sustain pulse applied in a sustain period of the remaining sub-fields of the sub-field groups.

34. A method of driving a plasma display apparatus displaying an image in a frame having a plurality of subfield groups, the method comprising:
setting a voltage of a first sustain pulse applied to a scan electrode or a sustain electrode in a sustain period of at least one sub-field of the sub-field groups, to be different from a voltage of a second sustain pulse applied in a sustain period of the remaining sub-fields of the sub-field groups.

35. A method of driving a plasma display apparatus displaying an image in a frame having a plurality of subfield groups, the method comprising:
setting a slope of a first sustain pulse applied to a scan electrode or a sustain electrode in a sustain period of at least one sub-field of the sub-field groups, to be different from a slope of a second sustain pulse applied in a sustain period of the remaining sub-fields of the sub-field groups.
